(19) Europäisches Patentamt
European Patent Office
Office européen des brevets

(11) EP 1 181 753 B1

(12) **EUROPÄISCHE PATENTSCHRIFT**

(45) Veröffentlichungstag und Bekanntmachung des Hinweises auf die Patenterteilung:
**15.01.2003 Patentblatt 2003/03**

(21) Anmeldenummer: **00940204.1**

(22) Anmeldetag: **19.05.2000**

(51) Int Cl.[7]: **H01S 3/098**, H01S 3/083

(86) Internationale Anmeldenummer:
**PCT/DE00/01584**

(87) Internationale Veröffentlichungsnummer:
**WO 00/072412 (30.11.2000 Gazette 2000/48)**

# (54) PASSIV MODENGEKOPPELTER FEMTOSEKUNDENLASER

PASSIVELY MODE-COUPLED FEMTOSECOND LASER

LASER FEMTOSECONDE A MODES SYNCHRONISES PASSIVEMENT

(84) Benannte Vertragsstaaten:
**AT BE CH CY DE DK ES FI FR GB GR IE IT LI LU MC NL PT SE**

(30) Priorität: **21.05.1999 DE 19923541**
**16.12.1999 DE 19960765**

(43) Veröffentlichungstag der Anmeldung:
**27.02.2002 Patentblatt 2002/09**

(73) Patentinhaber: **Gigaoptics GmbH**
**63165 Mühlheim am Main (DE)**

(72) Erfinder:
- **DEKORSY,Thomas**
  **01454 Ullersdorf (DE)**
- **BARTELS, Albrecht**
  **52072 Aachen (DE)**
- **KURZ, Heinrich**
  **D-52076 Aachen (DE)**

(74) Vertreter: **Tönhardt, Marion, Dr. et al**
**Forrester & Boehmert,**
**Pettenkoferstrasse 20-22**
**80336 München (DE)**

(56) Entgegenhaltungen:
**US-A- 5 265 109**

- **KASPER A ET AL: "10-FS PULSE GENERATION FROM A UNIDIRECTIONAL KERR-LENS MODE-LOCKED TI:SAPPHIRE RING LASER" OPTICS LETTERS,US,OPTICAL SOCIETY OF AMERICA, WASHINGTON, Bd. 21, Nr. 5, 1. März 1996 (1996-03-01), Seiten 360-362, XP000559758 ISSN: 0146-9592**
- **LIN XU ET AL: "ULTRABROADBAND RING OSCILLATOR FOR SUB-10-FS PULSE GENERATION" OPTICS LETTERS,US,OPTICAL SOCIETY OF AMERICA, WASHINGTON, Bd. 21, Nr. 16, 15. August 1996 (1996-08-15), Seiten 1259-1261, XP000623776 ISSN: 0146-9592**
- **BARTELS A ET AL: "Femtosecond Ti:sapphire ring laser with a 2-GHz repetition rate and its application in time-resolved spectroscopy" OPTICS LETTERS, 15 JULY 1999, OPT. SOC. AMERICA, USA, Bd. 24, Nr. 14, Seiten 996-998, XP002150035 ISSN: 0146-9592**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 181 753 B1

Printed by Jouve, 75001 PARIS (FR)

## Beschreibung

Die Erfindung betrifft einen passiv modengekoppelten Femtosekundenlaser mit einem Ringresonator, der ein laseraktives Element, einen optischen Auskoppler sowie mindestens eine spiegelndes Element aufweist. Weiter betrifft die Erfindung einen Femtosekundenlaser gemäß des Oberbegriffs des Anspruchs 7 sowie weiter einen Femtosekundenlaser gemäß des Oberbegriffs des Anspruchs 1. Weiter betrifft die Erfindung ein Verfahren zum Durchstimmen eines Femtosekundenlasers. Außerdem betrifft die Erfindung die Verwendung eines Femtosekundenlasers zur Erzeugung von Laserpulsen mit einer Dauer von unterhalb einer Pikosekunde.

Mit passiv modengekoppelten Femtosekundenlasersystemen sind relativ hohe Pulswiederholraten im Bereich von einigen 100 Megahertz erreichbar. Diese Lasersysteme sind dennoch nicht als hochrepetierlich zu bezeichnen, denn ihre Repetitionsraten liegen nicht oberhalb von 500MHz. Bedingt durch die extrem niedrige Pulsdauer zeigen die Pulse eine hohe maximale Intensität. Femtosekundenlaser werden bereits erfolgreich im Bereich der zeitaufgelösten Spektroskopie, der nichtlinearen Optik, Mehrphotonenmikroskopie, der Mikromaterialbearbeitung, der optischen Frequenzmetrologie und der optischen Kohärenztomatographie eingesetzt. In Zukunft werden derartige Laser auch im Bereich der optischen Datenkommunikation eine wesentliche Rolle spielen.

Gängige passiv modengekoppelte Femtosekundenlasersysteme beruhen auf der Verwendung von Titan dotierten Saphirkristallen als laseraktive Elementen. Diese zeigen bei optischer Anregung ein breites Fluoreszenzspektrum im Bereich zwischen 700 und 1000 nm. Aus diesem resultiert ein Verstärkungsprofil vergleichbarer Breite, das bedeutet, das Ti:Saphir-Lasersysteme zur Erzeugung von Laserlicht im genannten Wellenlängenbereich geeignet sind.

Bei der Erzeugung ultrakurzer Laserpulse muß beachtet werden, dass ein zeitlich kurzer Laserpuls mit einer breiten Frequenzverteilung korreliert ist. Aus diesem Grunde sind ausschließlich Laserelemente mit sehr breitem Verstärkungsprofil zur Erzeugung ultrakurzer Pulse geeignet.

Alle bislang bekannten passiv modengekoppelten Femtosekundenlasersysteme mit einem Festkörper als laseraktiven Element (CPM-Farbstofflaser ist auch passiv modengekoppelt) beruhen auf dem Konzept des "Kerr lens mode-locking". Dieser nichtlineare optische Effekt führt durch Selbstfokussierung eines intensiven Lichtstrahls in einem nichtlinearen Medium zur zeitlich gegenüber dem kontinuierlichen Laserbetrieb Verstärkung eines einzelnen im Resonator umlaufenden Pulses im laseraktiven Element.

Die Repetitionsrate eines solchen Femtosekundenlasersystems ist bestimmt durch die Umlaufdauer des im Resonator umlaufenden Pulses.

Die Dauer des resonatorumlaufenden Pulses erreicht jedoch nicht das theoretische Limit, welches durch die Breite des Verstärkungsprofils des laseraktiven Elements bestimmt ist. Dies wird verursacht durch das Phänomen der Pulsverbreiterung, welches der im Resonator umlaufende Laserpuls insbesondere im laseraktiven Element erfährt. Dieser Effekt wird verursacht durch die sogenannte positive Gruppengeschwindigkeitsdispersion des laseraktiven Elements und weiterer optischer Komponenten im Resonator. Sie hat zur Folge, dass die unterschiedlichen Wellenlängenbestandteile des umlaufenden Pulses das laseraktive Element innerhalb unterschiedlicher Zeiten durchlaufen, wodurch der durch das laseraktive Element hindurchlaufende Laserpuls zeitlich verbreitert wird.

Der klassische Ansatz, die Pulsverbreiterung zu kompensieren, welche durch die positive Gruppengeschwindigkeitsdispersion des laseraktiven Elements und weiterer optischer Komponenten des Resonators verursacht wird, ist die Verwendung einer Anordnung innerhalb des Laserresonators, die eine negative Gruppengeschwindigkeitsdispersion aufweist, die die durch das laseraktive Element und der weiteren optischen Komponenten verursachte Pulsverbreiterung mindestens gerade kompensiert.

Vorbekannt ist beispielsweise eine Anordnung aus zwei dispersiven Elementen, beispielsweise Prismen im Laserresonator, ein sogenannter Prismenkompressor.

Grundlagen zu Femtosekundenlasersystemen, die auf "Kerr lens modelocked" Ti:Saphir-Lasern mit Prismenkompressoren beruhen, können beispielsweise der Veröffentlichung von D.E. Spence, P.N. Kean, W.Sibbet in *Optics Letters* **16,** Seite 42 ff (1991) entnommen werden.

Alternativ zu den erwähnten Prismen oder Gitterkompressoren wurden in jüngster Zeit dielektrische Spiegel entwickelt, die eine negative Gruppengeschwindigkeitsdispersion GGD aufweisen. Diese wird erzielt durch eine geeignete Abfolge dielektrischer Schichten auf einem Substrat. Das Grundkonzept kann der Veröffentlichung von R. Szipöcs, K. Ferencz, CH. Spielmann, F. Krausz, in *Optics Letters* **19,** Seite 201 ff (1994) entnommen werden.

Die Verwendung solcher Spiegel mit negativer Gruppengeschwindigkeitsdispersion GGD im Laserresonator bietet den wesentlichen Vorteil, dass im Gegensatz zu den bereits erwähnten Prismen- bzw. Gitterkompressoren nur eine unwesentliche Verlängerung des optischen Wegs im Resonator auftritt.

Ein Femtosekundenlasersystem, welches auf den genannten Spiegeln basiert, ist beispielsweise aus der Veröffentlichung von H. Stingl, Ch. Spielmann, R. Szipöcs, F. Krausz in *Conference on Lasers and Electro-Optics* **9,** 1996 OSA Technical Digest Series (O.S. A., Washington D.C., 1996) S. 66 ff entnommen werden.

Eine Mehrzahl der auf dem Phänomen des "Kerr lens mode-locking" beruhenden Ti:Saphir-Femtosekundenlasersystemen beruht auf Fabry-Perot-Resonatoren, welche sich durch plane Endspiegel auszeichnen, vorzugsweise in gefalteter Konfiguration. Bei dieser Konfiguration können die zur Pulskompression nötigen Elemente wie Prismen einfach in einem Arm des Resonators untergebracht werden. Die Gesamtlänge eines solchen Resonators beträgt typischerweise in der Größenordnung von 2 Metern. Hieraus ergeben sich typische Pulsrepetitionsraten im Bereich von wenigen 100 MHz oder in der Regel unter 100MHz. Derartige Lasersysteme werden nicht als hochrepetierlich bezeichnet.

Aus der bereits erwähnten Veröffentlichung von A. Stingl et. al. ist beispielsweise ein passiv modengekoppeltes Ti:Saphir-Femtosekundenlasersystem bekannt, welches auf einem Fabry-Perot-Resonator beruht, und mehrere Spiegel mit negativer Gruppengeschwindigkeitsdispersion GGD verwendet.

Weiterhin ist aus der US 5,383,198 ein selbststartendes passiv modengekoppeltes Femtosekundenlasersystem mit einem Prismenkompressoren und Ringresonator sowie aus der US 5,799,025 ein selbststartendes passiv modengekoppeltes Femtosekundenlasersystem mit einem Prismenkompressor und Fabry-Perot-Resonator bekannt.

Bedingt durch die jeweiligen Resonatorgeometrien ist es aber mit keinem der genannten Lasersysteme möglich, Pulsrepetitionsraten größer als 500 MHz zu erzielen, weswegen diese Lasersysteme nicht als hochrepetierlich bezeichnet werden können.

Ein alternativer Zugang kann der Veröffentlichung von M. Ramaswamy und J.G. Fujimoto in *Optics Letters* **19,** S. 1756 ff (1994) entnommen werden (siehe auch US 5 553 093). Er beruht auf einer vereinfachten Resonatorkonfiguration unter Verwendung eines speziellen Prismenkompressors. Statt des üblichen resonatorinternen Prismenpaars wird ein prismenförmiger Laserkristall und ein prismenförmiger Auskoppler benutzt. Eine spezielle Geometrie des als Fabry-Perot-Resonator ausgebildeten Laserresonators sowie der vereinfachte Prismenkompressor ermöglicht eine Verkürzung der Resonatorlänge auf etwa 30 cm, so dass eine Repetitionsrate von 1 GHz erreicht werden kann.

Nachteilig an diesem Konzept ist, dass im Ausgangsstrahl die in einem Laserpuls überlagerten verschiedenen spektralen Komponenten senkrecht zur Strahlrichtung räumlich auseinanderlaufen ("räumlicher chirp"), was einen praktischen Einsatz dieses Laserkonzepts zumindest erschwert.

Allerdings erzwingt der im Resonator befindliche Prismenkompressor eine Mindestlänge des Resonators, die es unwahrscheinlich bis unmöglich erscheinen läßt, höhere Repetitionsraten als etwa 1 GHz zu erreichen.

Ein Prismenkompressor bewirkt zusätzlich zur negativen Gruppengeschwindigkeitsdispersion eine räumliche Aufspaltung der unterschiedlichen spektralen Komponenten eines resonatorumlaufenden Laserpulses in Teilen des Resonators. Durch eine geeignete, verschiebbare Apertur in einem Bereich des Resonators, in dem die spektralen Komponenten räumlich aufgespalten sind, kann eine Auswahl der Wellenlänge vorgenommen werden, für die der Resonator Lasertätigkeit erlaubt. Dadurch wird eine Wellenlängendurchstimmbarkeit erzielt. Aus dem Femtosekundenlasersystem Tsunami der Firma Spectra Physics, Mountain View, Kalifornien ist eine solche Anordnung beispielsweise bekannt.

Bedingt durch die jeweiligen Resonatorgeometrien ist es aber außerdem mit keinem der genannten Lasersysteme möglich, Pulsrepetitionsraten größer als 500 MHz bei gleichzeitiger Wellenlängendurchstimmbarkeit zu erzielen, weswegen diese Lasersysteme nicht als hochrepetierlich bezeichnet werden können.

Aufgabe der vorliegenden Erfindung ist es daher, einen passiv modengekoppelten hochrepetierlichen Femtosekundenlaser anzugeben, mit dem Laserpulse mit einer Dauer unterhalb von einer Pikosekunde erzeugbar sind, und der zugleich mit Repetitionsraten ohne weiteres oberhalb von 500MHz, insbesondere oberhalb von 1 GHz betreibbar ist. Ein Lasersystem gemäß einer ersten Variante der Erfindung soll insbesondere zur Erzeugung solcher Laserpulse verwendet werden.

Weiterhin soll ein Lasersystem so ausgestaltet sein, daß mit diesem innerhalb des Verstärkungsprofils des laseraktiven Mediums kontinuierlich durchstimmbare Laserpulse mit einer Dauer unterhalb von einer Pikosekunde erzeugbar sind und das zugleich mit Repetitionsraten ohne weiteres oberhalb von 500MHz, insbesondere oberhalb von 1 GHz betreibbar ist. Ein Lasersystem gemäß einer zweiten Variante der Erfindung soll insbesondere zur Erzeugung solcher Laserpulse verwendet werden.

Bei solchen Lasersystemen sollte der aus dem Laserresonator ausgekoppelte Laserstrahl kein räumliches Auseinanderlaufen der spektralen Komponenten senkrecht zur Strahlrichtung mehr aufweisen.

Weiterhin sollte der Flächenbedarf eines derartigen Lasersystems gegenüber den vorbekannten Lasersystemen, insbesondere gegenüber den kommerziell erhältlichen Lasersystemen, deutlich verringert werden.

Es soll zudem ein besonders geeignetes Verfahren zum Durchstimmen eines hochrepetierlichen Lasersystems angegeben werden.

Zur Lösung dieser Aufgabe geht die Erfindung in einer ersten Variante aus, von einem passiv modengekoppelten Femtosekundenlaser gemäß dem Oberbegriff des Anspruchs 7.

Ein solcher Femtosekundenlaser weist nämlich ein laseraktives Element auf, welches zwischen den konkaven Flächen zweier Konkavspiegel angeordnet ist. Der Resonator kann durchaus weitere spiegelnde oder andere optische Elemente aufweisen z.B. weitere Planspiegel. Der zugehörige Ringresonator weist zudem mindestens einen dielektrischen Spiegel, d.h. einen oder auch mehrere, auf. Ein dielektrischer Spiegel weist eine negative Gruppengeschwindigkeitsdispersion GGD auf. Die negative Gruppengeschwindigkeitsdispersion GGD ist dergestalt dass für einen zusammenhängenden Teil des durch das laseraktive Element verstärkungsfähigen optischen Spektralbereichs die Summe der negativen Gruppengeschwindigkeitsdispersionen GGD des dielektrischen Spiegels (oder gegebenenfalls der mehreren dielektrischen Spiegel) und der positiven Gruppengeschwindigkeitsdispersion GGD des laseraktiven Elements, und gegebenenfalls der weiteren optischen Elemente, negativ ist. D.h.

$$\sum_n GGD_n < 0$$

Dies stellt eine Grundvoraussetzung für die Erzeugung von Femtosekundenpulsen dar. Weiterhin ist im Resonator ein optischer Auskoppler angeordnet.

Erfindungsgemäß ist bei der ersten Variante ein solcher Resonator dergestalt ausgebildet, dass die optische Weglänge im Resonator kleiner als 60 cm, vorzugsweise kleiner als 30 cm, insbesondere kleiner als 15 cm ist. Aus diesen optischen Weglängen ergeben sich Pulswiederholraten, die ohne weiteres größer sind als 500 MHz, vorzugsweise größer als 1 GHz, insbesondere größer als 2 GHz. Desweiteren sind die Brennweiten der Konkavspiegel, welche dem laseraktiven Element räumlich zunächst benachbart sind, kleiner als 3 cm, vorzugsweise kleiner als 2 cm, insbesondere kleiner oder gleich 1,5 cm gewählt.
Mit einem solchen Laser ist also ein hochrepetierlicher Laserpulsbetrieb mit Femtosekundenpulsen erreichbar, sodaß es sich um einen hochrepetierlichen Femtosekundenlaser handelt.

Ein passiv modengekoppelter hochrepetierlicher Femtosekundenlaser mit diesen Merkmalen weist eine Reihe wesentlicher Vorzüge auf. Die Verwendung eines Ringresonators anstelle eines linearen Fabry-Perot-Resonators ermöglicht eine deutliche Reduzierung der Resonatorlänge, was eine Grundvoraussetzung für die Erzielung hoher Pulswiederholraten ist.

Die Verwendung dielektrischer Spiegel mit negativer Gruppengeschwindigkeitsdispersion GGD anstelle von sonst üblichen Prismen- oder Gitterkompressoren ermöglicht es zusätzlich, die Länge des Ringresonators zu reduzieren. Hierdurch ist es möglich, die geometrische Länge des Resonators um über 10 cm zu reduzieren, was wiederum mit einer Erhöhung der Pulswiederholrate einhergeht.

Zudem geht die Erfindung von der Erkenntnis aus, daß die Verwendung von Konkavspiegeln, die dem laseraktiven Element räumlich zunächst benachbart sind, und deren Brennweiten im genannten vorgegebenen Bereich entsprechend des kennzeichnenden Teils des Anspruchs 7 liegen, es ermöglicht einen Strahldurchmesser der Resonatormode im laseraktiven Element zu erzielen, die dem Verlauf einer Resonatormode eines konventionellen linearen Fabry-Perot- oder auch eines Ringresonators jeweils mit deutlich größerer geometrischer Länge vergleichbar ist. Ein solcher kleiner Durchmesser der Resonatormode im laseraktiven Element, insbesondere einer Strahltaille im laseraktiven Element, ist eine wesentliche Bedingung für die effiziente Erzeugung von Laserpulsen. Insbesondere für die beiden fundamentalen Effekte, die für die Erzeugung ultrakurzer Pulse in einem passiv modengekoppelten Lasersystem verantwortlich sind ist dies eine wesentliche Bedingung. Dies sind die sogenannte Selbstphasenmodulation SPM sowie die sogenannte Selbstamplitudenmodulation SAM in einem nichtlinearen Medium, insbesondere also einem laseraktiven Medium wie dem laseraktiven Element im Resonator. Beide beruhen wiederum auf dem sogenannten Kerr-Effekt. Als Kerr-Effekt wird die Abhängigkeit des Brechungsindexes von der lokalen Lichtintensität bezeichnet.

Die Selbstphasenmodulation SPM, die durch die Größe $\Phi$ charakterisiert wird, die im Laserkristall auftritt, ist wesentlich für die minimal erreichbare Pulslänge $\tau$. Es gilt:

$$\tau \propto \frac{|D|}{\Phi E_p}$$

Hierin ist D die über alle optischen Elemente im Resonator summierte Gruppengeschwindigkeitsdispersion GGD:

$$D = \sum_n GGD_n$$

$E_P$ ist die Pulsenergie.

Die Größe der Selbstphasenmodulation $\Phi$ ist im wesentlichen invers proportional zum Quadrat des Strahlradius w im Laserkristall. Um eine möglichst hohe Intensität im Laserkristall zu erzielen, ist es daher unumgänglich, einen möglichst kleinen Strahldurchmesser der Resonatormode im laseraktiven Element zu erreichen, insbesondere eine Strahltaille mit möglichst kleinem Durchmesser im laseraktiven Element zu erzielen. Genau dieser Effekt wird durch die Verwendung der erfindungsgemäßen konkaven Spiegel mit den angegebenen Brennweiten bei der angegebenen maximalen Resonatorlänge erzielt.

Dabei wird weiterhin der Vorteil erreicht, daß der aus dem Laserresonator ausgekoppelte Laserstrahl kein räumliches Auseinanderlaufen der spektralen Komponenten senkrecht zur Strahlrichtung mehr aufweist.

Zudem ist auch u.a. durch die geschickte Wahl der Resonatorgeometrie der Flächenbedarf eines derartigen Lasersystems gegenüber den vorbekannten Lasersystemen, insbesondere gegenüber den kommerziell erhältlichen Lasersystemen, deutlich verringert.

Weiterhin geht die Erfindung in einer zweiten Variante zur Lösung der Aufgabe aus, von einem passiv modengekoppelten Femtosekundenlaser gemäß dem Oberbegriff des Anspruchs 1.

Dies betrifft insbesondere die Erzeugung innerhalb des Verstärkungsprofils des laseraktiven Mediums kontinuierlich durchstimmbarer Laserpulse.

Ein solcher Femtosekundenlaser gemäß der zweiten Variante der Erfindung weist nämlich, wie schon bei der ersten Variante der Erfindung, ein laseraktives Element auf, welches zwischen den konkaven Flächen zweier Konkavspiegel angeordnet ist. Zusätzlich zu den bei der ersten Variante genannten weiteren Elementen des Ringresonators (mindestens ein dielektrischer Spiegel, zwei Konkavspiegel, Auskoppler) weist die zweite Variante noch ein selbstfokussierendes Element und ein prismatisches Element auf.

Erfindungsgemäß ist bei der zweiten Variante ein solcher Resonator dergestalt ausgebildet, dass die optische Weglänge im Resonator kleiner als 60 cm, vorzugsweise kleiner als 30 cm, insbesondere kleiner als 15 cm ist. Aus diesen optischen Weglängen ergeben sich Pulswiederholraten, die ohne weiteres größer sind als 500 MHz, vorzugsweise größer als 1 GHz, insbesondere größer als 2 GHz. Desweiteren sind die Brennweiten der Konkavspiegel, welche dem laseraktiven Element räumlich zunächst benachbart sind, kleiner als 3 cm, vorzugsweise kleiner als 2 cm, insbesondere kleiner oder gleich 1,5 cm gewählt. Desweiteren ist mindestens der dielektrische Spiegel oder der Auskoppler oder ein weiterer Spiegel um eine Achse verkippbar, dergestalt daß in Zusammenspiel mit der räumlichen Dispersion des prismatischen Elements durch den Verkippungswinkel eine Wellenlänge, vorteilhaft kontinuierlich, einstellbar ist, für die der Resonator Lasertätigkeit unterstützt.

Mit einem solchen Laser ist also ebenfalls ein hochrepetierlicher Laserpulsbetrieb mit Femtosekundenpulsen erreichbar, sodaß es sich um einen hochrepetierlichen Femtosekundenlaser handelt. Zudem ist dieser hochrepetierlicher Femtosekundenlaser auch noch kontinuierlich durchstimmbar. Der Resonator enthält ein prismatisches Element, das eine räumliche Trennung unterschiedlicher spektraler Komponenten des im Resonator umlaufenden Lichts bewirkt. Die Erfindung geht gemäß ihrer zweiten Variante dabei von der Erkenntnis aus, daß in Zusammenspiel mit einem um eine Achse senkrecht zur Ebene, in der die spektralen Komponenten aufgespalten sind, verkippbaren Spiegel durch dessen Verkippung die Wellenlänge auswählbar ist, für die im Resonator die höchste Gesamtverstärkung entsteht. Diese Wellenlänge ist dann die Betriebswellenlänge des Lasers.

Obwohl bei den meisten Femtosekundenlasersystemen eine Durchstimmbarkeit mit Aufwand verbunden ist und zumeist in der Regel zu Lasten der Pulsdauer und der Repetitionsrate geht (z.B. bei Verwendung eines Prismenkompressors, der platzraubend und stark pulsverbreiternd wirkt) so ist ein wellenlängendurchstimmbarer Femtosekundenlaser besonders vorteilhaft. Denn er ermöglicht in einem durch das Verstärkungsprofil vorgegebenem Rahmen die Anpassung der optischen Wellenlänge an die Erfordernisse der gewünschten Anwendung ermöglicht. Bei dem Femtosekundenlaser gemäß der zweiten Variante der Erfindung ist dies auf besonders elegante und einfache Weise gelungen. Denn darüber hinaus weist ein solcher kontinuierlich durchstimmbarer hochrepetierlicher Femtosekundenlaser auch die Vorteile es Lasers gemäß der ersten Variante der Erfindung auf.

Hier ist also insbesondere Hochrepetierlichkeit, Kompaktheit, Durchstimmbarkeit und Femtosekundenbetrieb in Kombination realisiert.

Dabei ist es vorteilhaft, wenn gemäß der Weiterbildung insbesondere der zweiten Variante der Erfindung, das laseraktive Element auch ein selbstfokussierendes Element ist, d.h. laseraktives Element und selbstfokussierndes Element sind identisch. Dies ist beispielsweise beim Titan:Saphir Laser der Fall.

Vorteilhaft ist der Resonator in Zusammenspiel mit dem nichtlinearen Element derart ausgestaltet ist, daß gepulster Laserbetrieb eine höhere Energieausbeute aus dem laseraktiven Element erlaubt als bei einem kontinuierlichen Laserbetrieb.

Das prismatische Element ist vorteilhaft derart ausgestaltet ist, daß ein unter der Minimalablenkungsbedingung auf eine Prismenfläche auftreffender optischer Strahl mit einer durch das laseraktive Medium verstärkungsfähigen Wellenlänge im Brewsterwinkel auf diese auftrifft und unter diesem wieder aus der Austrittsfläche austritt.

Wahlweise kann das prismatische Element aber auch derart ausgestaltet sein, daß ein unter dem Brewsterwinkel auf eine Prismenfläche auftreffender optischer Strahl mit einer durch das laseraktive Medium verstärkungsfähigen Wellenlänge im wesentlichen im rechten Winkel zur Austrittsfläche wieder austritt. Dabei ist vorteilhaft die Austrittsfläche mit einer Antireflexbeschichtung für die durch das laseraktive Medium verstärkungsfähigen Wellenlängen versehen ist.

Die bereits genannten Weiterbildungen der Erfindung lassen sich insbesondere auf die Erfindung gemäß ihrer zweiten Variante anwenden, ebenso aber auch auf die Erfindung gemäß ihrer ersten Variante.

Insbesondere wird im Rahmen vorteilhafter Weiterbildungen der Erfindung gemäß ihrer ersten Variante als auch gemäß ihrer zweiten Variante bei der Wahl der weiteren Resonatorparameter darauf geachtet, dass sich ein optisch stabiler Resonator ergibt.

So hat sich weiterhin gezeigt, dass sich ein besonders vorteilhaftes Lasersystem ergibt, wenn die Brennweiten der Konkavspiegel, die. dem laseraktiven Element räumlich zunächst benachbart sind, im wesentlichen gleich gewählt sind. Dies ermöglicht vor allen Dingen ein im wesentlichen spiegelsymmetrischen Aufbau des Laserresonators.

In einer weiteren vorteilhaften Weiterbildung des Lasersystems gemäß der Erfindung ist der geometrische Abstand der Konkavspiegel voneinander kleiner als die Summe der Brennweiten der Konkavspiegel gewählt. Wird nur der Abstand d der Konkavspiegel voneinander variiert, während die gesamte restliche Resonatorgeometrie konstant gehalten wird, so läßt sich ein Intervall dieses Abstandes ermitteln, innerhalb dessen ein stabiler Betrieb des Laserresonators möglich ist. Dieses Intervall ist im wesentlichen symmetrisch um einen solchen Abstand der Konkavspiegel voneinander angeordnet, der genau der Summe der Brennweiten der Konkavspiegel entspricht.

Es hat sich herausgestellt, dass ein besonders stabiler Betrieb im passiv modengekoppelten Zustand möglich ist, wenn der Abstand d der Konkavspiegel voneinander kleiner als die Summe der Brennweiten der Konkavspiegel gewählt wird. Es ergibt sich ein positiver Einfluß auf die Bildung des für die passive Modenkopplung essentiellen Kerr-Effekts.

Dieser Effekt kann auch verstärkt werden, wenn das laseraktive Element nicht symmetrisch zwischen den angrenzenden Konkavspiegeln angeordnet wird, sondern gemäß den Vorschriften des Anspruchs 10. Wird eine solche Anordnung des laseraktiven Elements realisiert, so ergibt sich eine Abnahme des Strahldurchmessers im Laserkristall mit steigender momentaner Leistung im Puls. Dieser ebenfalls auf dem Kerr-Effekt beruhende Effekt wird in Kombination mit einem stärker als die Resonatormode fokussierten Pumpstrahl auch als Bildung einer "weichen Apertur" bezeichnet und fördert ebenfalls einen stabilen passiv modengekoppelten Pulsbetrieb.

In einer weiteren vorteilhaften Weiterbildung des Lasersystems gemäß der Erfindung wird der Abstand d zwischen den Konkavspiegeln größer gewählt als die Summe der Brennweiten der Konkavspiegel. In diesem Fall kann kein Auftreten einer "weichen Apertur" im laseraktiven Element beobachtet werden. Anstelle dieser kann jedoch eine sogenannte harte Apertur, die beispielsweise durch eine Ringblende gebildet sein kann, im Ringresonator angeordnet sein. Insbesondere ist eine solche harte Apertur an einer solchen Stelle im Resonator vorzusehen, an der die Resonatormode bei größerer Momentanleistung einen kleineren Durchmesser hat.

Es hat sich gezeigt, dass ein Lasersystem gemäß der Erfindung vorteilhaft einen Titan dotierten Saphirkristall als laseraktives Element verwenden kann. Weiterhin ist aber auch die Verwendung anderer laseraktiver Elemente möglich, die ein so breites Verstärkungsspektrum aufweisen, dass theoretisch die Erzeugung von Femtosekundenpulsen möglich ist. Insbesondere sind an dieser Stelle die in Anspruch 12 genannten laseraktiven Elemente zu nennen.

Zum optischen Pumpen des laseraktiven Elements kann beispielsweise ein Argon-Ionenlaser verwendet werden, der insbesondere auf die maximale Absorption des laseraktiven Elements abgestimmt wird.

In einer besonders vorteilhaften Weiterbildung des Lasersystems gemäß der Erfindung wird als Pumplaser ein Festkörperlasersystem eingesetzt, dessen Wellenlängenspektrum an das Absorptionsspektrum des laseraktiven Elements angepaßt gewählt ist. Insbesondere eignen sich hier die in Anspruch 13 genannten frequenzverdoppelten Festkörperlasersysteme. Die Verwendung von naturgemäß rauscharmen Festkörperlasersystemen als Pumplaser wirkt sich vorteilhaft auf die Intensitätsschwankungen der vom Lasersystem gemäß der Erfindung generierten gepulsten Laserstrahlung aus.

Weiterhin hat sich gezeigt, dass für einen stabilen passiv modengekoppelten Pulsbetrieb bei einem vergleichsweise guten Wirkungsgrad des Lasersystems gemäß der Erfindung der Auskoppelgrad T des optischen Auskopplers kleiner als 5% sein sollte, vorzugsweise kleiner als 3%, insbesondere kleiner oder gleich 2% sein sollte. Höhere Auskoppelgrade T erhöhten die Quanteneffizienz des Lasersystems, kleinere Auskoppelgrade T stabilisieren das erfindungsgemäße Lasersystem im passiv modengekoppelten Pulsbetrieb. Der Auskoppler wird vorteilhaft als teilreflektierender, insbesondere dielektrischer Spiegel ausgebildet.

Alternativ können auch andere Möglichkeiten zur Auskopplung realisiert werden, beispielsweise mittels Auskopplung einer evanszenten Welle, die von einer inneren Totalreflektion der Resonatormode an einer Grenzfläche herrührt. In einer solchen Ausführung kann der Auskoppelgrad in bestimmten Grenzen frei variiert werden.

In einer weiteren vorteilhaften Weiterbildung des Lasersystems gemäß der Erfindung weisen alle Spiegel des Ringresonators eine negative Gruppengeschwindigkeitsdispersion GGD auf. Je nach Stärke der positiven Gruppengeschwindigkeitsdispersion GGD, welche vom laseraktiven Element verursacht wird, kann auch nur ein einziger Spiegel mit negativer Gruppengeschwindigkeitsdispersion GGD im Laserresonator eingesetzt werden. Insbesondere kann auch der Auskoppelspiegel eine negative Gruppengeschwindigkeitsdispersion GGD aufweisen.

In einer besonders vorteilhaften Weiterbildung des Lasersystems gemäß der Erfindung ist der Ringresonator so ausgeführt, dass er astigmatismuskompensiert ist. Dies kann durch geeignete Wahl der Resonatorgeometrie, insbesondere der Reflektionswinkel auf den Konkavspiegeln realisiert werden. Insbesondere kann auf diese Weise eine Strahltaille mit rundem Querschnitt im laseraktiven Element und/oder ein aus dem Laserresonator ausgekoppelter Strahl mit rundem Querschnitt realisiert werden. Besonders vorteilhaft zur Kompensation des Astigmatismus ist es, wenn die optische Weglänge im Ringresonator größer als 1 cm, vorzugsweise größer als 2 cm und insbesondere größer als 3,5 cm gewählt ist, da bei kleineren Weglängen extrem hohe Reflexionswinkel auf den Konkavspiegeln zur Kompensation des Astigmatismus des laseraktiven Elements realisiert werden müssen.

Besondere praktische Vorteile bei der Verwendung des Lasersystems gemäß der Erfindung ergeben sich, wenn alle Elemente des Ringresonators mechanisch auf einer gemeinsamen Montageplattform angeordnet sind. Insbesondere ist auch die Montage der optischen Komponenten in einem monolithischen Block möglich.

Besondere Vorteile des Lasersystems gemäß der Erfindung liegen also in seiner hohen Pulsrepetitionsrate, die zwischen 500 MHz und etwa 10 GHz liegen kann. Weiterhin vorteilhaft ist sein gegenüber vorbekannten Lasersystem deutlich verringerter Flächenbedarf d.h. Raumbedarf, der es ermöglicht, kostbare Stellfläche auf optischen Tischen einzusparen. Schließlich ergibt sich ein um den Faktor 10 verbessertes Signal zu Rauschverhältnis bezüglich Intensitätsschwankungen gegenüber vorbekannten, insbesondere Gaslaser-gepumpten Lasersystemen. Zudem wird weiterhin der Vorteil erreicht, daß der aus dem Laserresonator ausgekoppelte Laserstrahl kein räumliches Auseinanderlaufen der spektralen Komponenten senkrecht zur Strahlrichtung mehr aufweist. Zudem erlaubt eine Variante der Erfindung die vorzugsweise kontinuierliche Durchstimmbarkeit eines Lasersystems gemäß der Erfindung.

Weitere Merkmale und Vorteile des erfindungsgemäßen Lasersystems ergeben sich aus den nun folgenden Ausführungsbeispielen, die nicht einschränkend zu verstehen sind, und die anhand der Zeichnung erläutert werden. In dieser zeigen:

Fig. 1: den Verlauf des Strahltaillenradius w in einem konventionellen langen Resonator im Vergleich zu einem konventionellen verkürzten Resonator, der für eine Pulsrepetitionsrate von 1 GHz ausgelegt ist,

Fig. 2: den Verlauf des Strahltaillenradius w im laseraktiven und gleichzeitig selbstfokussierenden Element als Funktion der Resonatorlänge für einen Ringresonator, dessen Geometrie auf eine Resonatorlänge von zwei Metern optimiert ist,

Fig. 3: eine schematische Ansicht eines Lasersystems gemäß der ersten Variante der Erfindung in Aufsicht, dessen Ringresonator aus zwei konkaven Spiegeln und vier Planspiegeln gebildet wird,

Fig. 4: eine schematische Darstellung eines Lasersystems gemäß der ersten Variante der Erfindung, dessen Ringresonator von zwei Konkavspiegeln und zwei Planspiegeln gebildet wird, in Aufsicht und

Fig. 5: eine Weiterentwicklung des in Figur 3 gezeigten Lasersystems zum Erzielen einer Selbststartfunktion in einer vorgegebenen Umlaufrichtung,

Fig. 6: eine schematische Ansicht eines wellenlängendurchstimmbaren Lasersystems gemäß der zweiten Variante der Erfindung mit Brewsterprisma,

Fig. 7: eine schematische Ansicht eines wellenlängendurchstimmbaren Lasersystems gemäß der zweiten Variante der Erfindung mit halbiertem Brewsterprisma,

Fig. 8: eine schematische Darstellung der relativen Position X1, X2,d von Konkavspiegeln und laseraktivem, selbstfokussierendem Element,

Fig. 9: den Stabilitätsverlauf eines Lasers gemäß der Erfindung, dessen Resonator auf eine Pulsrepetitionsrate auf 1 GHz ausgelegt ist, als Funktion des Spiegelabstands d,

Fig. 10: einen gemessenen Strahlquerschnitt des aus dem Lasersystem gemäß der Erfindung ausgekoppelten gepulsten Laserstrahls einschließlich einer daran angepaßten Gaußfunktion, sowie im Inset den Intensitätsverlauf senkrecht zur Strahlrichtung gemessen mittels einer CCD-Kamera,

Fig. 11: den Verlauf des Strahlradius w hinter dem Auskoppelspiegel in der Ebene des Laserresonators als Funktion des Abstands vom Auskoppelspiegel bei einem Lasersystem gemäß der Erfindung,

Fig. 12: den Verlauf der Ausgangsleistung als Funktion der Pumpleistung für ein Lasersystem gemäß der Erfindung mit einem Resonator im Pulsbetrieb mit einer Repetitionsrate von 1 GHz für zwei verschiedene Auskoppelgrade T.

Figur 1 zeigt den Verlauf der Resonatormode in einem konventionellen langen Resonator mit einer Resonatorlänge von 2 m als Funktion der Position auf der Strahlachse im Resonator im Bereich des Laserkristalls. Zum Vergleich ist der Verlauf der Resonatormode in einem konventionellen Resonator gezeigt, dessen Länge auf eine Pulsrepetitionsrate von 1 GHz optimiert wurde, ohne dass die Geometrie des Resonators abgepasst wurde. Der Inset verdeutlicht, dass eine einfache Verkürzung der Resonatorlänge eines konventionellen langen Resonators zwar prinzipiell zu einer Erhöhung der Pulsrepetitionsrate führt, sich jedoch gleichzeitig (und unvermeidlich) eine Zunahme des Strahltaillendurchmessers der Resonatormode im laseraktiven Element ergibt. Dies wirkt sich negativ auf den für die Pulsbildung elementaren Kerr-Effekt, insbesondere auf die Ausbildung einer Kerr-Linse im laseraktiven Element, aus. Eine einfache Verkürzung der Resonatorlänge eines konventionellen langen Resonators auf die für hohe Pulsrepetitionsraten erforderliche Länge wird daher im allgemeinen dazu führen, dass überhaupt kein oder kein stabiler Pulsbetrieb des Lasers mehr erreicht werden kann. Daher sind Änderungen der Resonatorgeometrie beim Übergang zu höheren Pulsrepetitionsraten unabdingbar.

Figur 2 verdeutlicht nochmals auf andere Weise den obigen Sachverhalt. Es ist nämlich nicht möglich, zur Erhöhung der Pulsrepetitionsrate die Resonatorlänge eines bereits vorbekannten Ringresonators mit geringer Pulsrepetitionsrate auf die entsprechend kürzere Länge zu verkürzen. Gezeigt wird der Radius der Strahltaille in einem solchen vorbekannten konventionellen Ringresonator im laseraktiven/selbstfokussierenden Element 1,2 als Funktion der Gesamtlänge des Ringresonators. Man erkennt eine starke Zunahme des Strahltaillenradius, wenn die Gesamtlänge des Resonators auf die erforderliche Länge von etwa 30 cm für eine Pulsrepetitionsrate von 1 GHz verkürzt wird. Eine solche Zunahme des Strahltaillenradius wirkt sich außerordentlich nachteilhaft aus auf das Auftreten des Kerr-Effektes im laseraktiven Element und somit auf einen stabilen passiv modengekoppelten Betrieb des Lasersystems.

Zur Erreichung hoher Pulsrepetitionsraten ist eine Verwendung von im Vergleich zu vorbekannten Lasersystemen verringerten Brennweiten f41, f42 bzw. f21,f22 der Konkavspiegel 41,42 bzw. 21,22 gemäß des Anspruchs 1 oder 7 des Lasersystems gemäß der zweiten und ersten Variante der Erfindung maßgeblich entscheidend.

Ein Ausführungsbeispiel eines Lasersystems gemäß der ersten Variante der Erfindung ist im folgenden der Figur 3 zu entnehmen.

Figur 3 zeigt eine schematische Ansicht eines Lasersystems gemäß der ersten Variante der Erfindung in Aufsicht. Der Laserresonator wird gebildet durch die Konkavspiegel 21 und 22 sowie die Planspiegel 2 und den planen Auskoppler 3. Das laseraktive Element 1 besteht aus einem Titan dotierten Saphirkristall mit einem Absorptionskoeffizient bei der Pumpwellenlänge von 532 nm von 5 pro cm. Die im Strahlengang befindlichen Oberflächen des Kristalls sind planparallel und optisch poliert, ihr Abstand beträgt 2,2 mm. Die Brennweite der verwendeten Konkavspiegel 21 und 22 beträgt 15 mm. Der Abstand d zwischen den Konkavspiegeln beträgt kleiner oder gleich 30 mm. Der Titansaphirkristall ist etwa mittig zwischen den Konkavspiegeln angeordnet, insbesondere entsprechend den Angaben in Anspruch 4. Als Pumplaser wird ein frequenzverdoppelter Nd: YAG-Laser mit einer Wellenlänge von 532 nm verwendet. Dieser wird mittels der Linse L durch den Konkavspiegel 21 in das laseraktive Element 1 fokussiert. Dabei werden Resonatormode und Pumplaserstrahl im laseraktiven Element 1 möglichst genau überlagert. Der von den auf den Konkavspiegeln 21 und 22 reflektierten Strahlen eingeschlossene Winkel trägt zwischen 15 und 25 Grad, insbesondere 18 Grad. Die Gesamtlänge des Resonators ist so gewählt, dass sich eine Pulsrepetitionsrate von 1 GHz ergibt. Die Planspiegel CM tragen eine hochreflektierende dielektrische Beschichtung mit negativer Gruppengeschwindigkeitsdispersion. Der ebenfalls plane Auskoppler OC ist als teilreflektierender dielektrischer Spiegel ausgeführt. Seine Reflektivität beträgt zwischen 95 und 99%, insbesondere 98%. Hinter dem Auskoppler OC ist vorteilhaft, jedoch nicht notwendigerweise eine Photodiode PD angeordnet. Eine solche Photodiode PD erlaubt mittels einer Intensitätsmessung, auf einfachste Weise einen Pulsbetrieb des gezeigten Lasersystems im Uhrzeigersinn nachzuweisen, nämlich durch Ausbleiben von Lichtintensität auf der Photodiode. Figur 4 zeigt einen Laser gemäß der ersten Variante der Erfindung wie schon in Figur 3. Im Vergleich dazu umfaßt diese Ausführung zwei Spiegel 4 weniger. Eine solche Anordnung ist besonders vorteilhaft zur Erreichung hoher Pulsrepetitionsraten, da die verringerte Anzahl Spiegel eine kürzere Gesamtresonatorlänge einfacher erreichen läßt.

Ein Lasersystem gemäß der Erfindung kann also auch mit einer geringeren Zahl von Spiegeln als bei dem in Figur 3 gezeigten System realisiert werden. Ein solches System wie in Figur 4 beruht nur auf der Verwendung von zwei Konkavspiegeln und zwei Planspiegeln. Es entspricht in weiten Teilen dem in Figur 3 gezeigten System. Jedoch ist nur der mit M1 bezeichnete Planspiegel als dielektrischer Spiegel 2 mit negativer Gruppengeschwindigkeitsdispersion GGD ausgeführt. Alle weiteren Spiegel tragen konventionelle dielektrische Beschichtungen, die auf den Konkavspiegeln hochreflektierend ausgeführt sind, sowie auf dem mit OC bezeichneten Auskoppler mit einer Transmission T von etwa 2%. Aufgrund der Tatsache, dass nur ein Spiegel mit negativer Gruppengeschwindigkeitsdispersion GGD zur Kompensation der positiven Gruppengeschwindigkeitsdispersion des laseraktiven Elements zur Verfügung steht, ist es vorteilhaft, die positive Gruppengeschwindigkeitsdispersion des laseraktiven Elements so klein wie möglich zu halten. Dies kann beispielsweise realisiert werden durch eine verringerte Länge des laseraktiven Elements. Dies ist bei dem in Figur 4 gezeigten Lasersystem gemäß der ersten Variante der Erfindung realisiert, der Abstand zwischen den planparallelen Flächen des Titansaphirkristalls, die unter dem Brewsterwinkel gegen die optische Achse angeordnet sind, beträgt nur 1,3 mm im Unterschied zu dem in Figur 3 gezeigten Beispiel. Um eine vergleichbar effektive Absorption des Pumplichts auf der verringerten Länge des laseraktiven Elements 1 zu erzielen, ist es vorteilhaft, das laseraktive Element 1 mit einer höheren Konzentration an laseraktiven Ionen oder Atomen zu dotieren. Im hier gezeigten Fall wurde die Titandotierung dergestalt erhöht, dass der Absorptionskoeffizient des laseraktiven Elements 1 bei der Pumpwellenlänge auf einen Wert von A = 6 pro cm anstieg. Auf diese Weise kann eine vergleichbare Absorption des Pumplichts im laseraktiven Element erreicht werden vergleichbar wie bei dem in Figur 3 gezeigten Lasersystem.

Figur 5 zeigt eine Ausführungsform einer vorteilhaften Weiterbildung eines Femtosekundenlasers gemäß der ersten Variante der Erfindung - beispielsweise aufbauend auf der in Figur 3 beschriebenen Ausführungsform eines Lasersystem gemäß der ersten Variante der Erfindung. Dies betrifft vor allem den zusätzlich zugefügten Planspiegel M6. Solange das Lasersystem gemäß der Erfindung im kontinuierlichen Betrieb arbeitet, laufen zwei gegenläufige Teilstrahlen im Ringresonator um. Demzufolge werden aus dem Auskoppelspiegel 3 zwei Teilstrahlen ausgekoppelt. Der Planspiegel M6 dient dazu, einen dieser beiden Teilstrahlen in den Resonator zurückzureflektieren. Dies hat den Effekt, dass die Intensität des im Uhrzeigersinn im Resonator umlaufenden Teilstrahls im laseraktiven Element 1 erhöht wird. Daher wird dieser Teilstrahl bei der Laseranregung bevorzugt und erfährt eine stärkere Kerr-Linsenbildung im laseraktiven Element 1, so dass ein Pulsbetrieb des erfindungsgemäßen Lasersystems in der Form eines im Uhrzeigersinn im Ringresonator umlaufenden Pulses bevorzugt wird. Der Spiegel M6 dient daher zur Vorgabe einer Laufrichtung des Laserpulses im Ringresonator.

Zusätzlich bewirkt der Planspiegel M6, dass der Femtosekundenlaser gemäß der ersten Variante der Erfindung spontan aus dem anfänglichen kontinuierlichen Laserbetrieb in den gepulsten Betrieb übergeht. Dieser Effekt kann auch verstärkt werden, indem an den Spiegel M6 eine periodische Störung angelegt wird, beispielsweise eine periodische Vibration.

Mittels eines Femtosekundenlasers gemäß der Erfindung wie in den Ausführungsbeispielen der Figuren 3, 4 und 5 beschrieben wurde gemäß der Erfindung dessen Ringresonator auf eine Pulsrepetitionsrate von 1 GHz optimiert. Dadurch war es möglich, bei einer Pumpleistung von 1,7 Watt eine mittlere Laserleistung von 100 Milliwatt (mW) zu erzielen, wobei die erzeugten Pulse eine Dauer von etwa 50 Femtosekunden aufwiesen. Für einen Femtosekundenlaser/Lasersystem gemäß der Erfindung, dessen Ringresonator auf einer Pulsrepetitionsrate von 2 GHz optimiert war, konnten Pulse mit einer Dauer von etwa 25 Femtosekunden erzielt werden. Es zeigte sich eine schwache Abhängigkeit der Pulsdauer $\tau$ von der Intensität des Pumplasers. Bei einer mittleren Pumpleistung von 2,5 Watt betrug die mittlere Pulsdauer $\tau$ 29 Femtosekunden, bei einer mittleren Pumpleistung von 5,5 Watt nahm die mittlere Pulsdauer $\tau$ auf 25 Femtosekunden ab. Eine Vermessung des Wellenlängenspektrums des im Pulsbetrieb laufenden Lasers ergab, dass die Breite der gemessenen Wellenlängenverteilung mit guter Genauigkeit der ermittelten Pulsdauer entsprach. Dies bedeutet, dass die Pulsdauer in erster Linie durch dispersive Effekte dritter Ordnung begrenzt war.

Bei der Transmission des ausgekoppelten Strahls durch das Substrat des Auskoppelspiegels 3, was typischerweise eine Dicke von 5 mm aufweist, tritt wiederum eine positive Gruppengeschwindigkeitsdispersion auf, die zu einer Verlängerung der Pulsdauer führt. Diese Verlängerung der Pulsdauer kann kompensiert werden durch mehrfache Reflektion an dielektrischen Spiegeln mit negativer Gruppengeschwindigkeitsdispersion. Dies ist in Figur 5 anhand der Spiegel M4 und M5 realisiert.

Vorteilhaft für die Verwendung eines Femtosekundenlasers/ Lasersystems gemäß der Erfindung, insbesondere für seine kommerzielle Anwendung, ist eine Montage der Elemente des Lasersystems, insbesondere der den Ringresonator bildenden Spiegel 2, 3 sowie des laseraktiven Elements 1 und aller zugehörigen Justageeinrichtungen auf einer gemeinsamen Montageplattform. Insbesondere können die Elemente des Lasersystems auch vorteilhaft in einem monolithischen Metallblock integriert werden, der beispielsweise aus Aluminium oder auch aus Invar bestehen kann.

Figur 6 zeigt einen Laserresonator eines Femtosekundenlasers gemäß der zweiten Variante der Erfindung. Dazu ist bei die in Figur 6 gezeigte Ausführungsform mit einer zusätzlichen Vorrichtung zum Durchstimmen der Wellenlänge nach Anspruch 1 ausgestattet. Eine hier gezeigte Ausführungsform des Resonators kann erstellt werden indem beispielsweise auf die in Figur 3 gezeigte Ausführungsform (gemäß der ersten Variante der Erfindung - Anspruch 7) aufgebaut wird. Das Brewster-Prisma 3 gemäß Anspruch 4 fungiert als räumlich dispersives Element und bewirkt eine räumliche Trennung verschiedener Wellenlängen. Durch Kippen eines Resonatorspiegels, vorzugsweise des dem Prisma zunächst benachbarten Spiegels (43), kann die Wellenlänge ausgewählt werden, für den der Resonator die geringsten Verluste hat. Dies ist die Betriebswellenänge des Lasers. Langwelligere und kurzwelligere Strahlung kann in dem Resonator nicht verstärkt werden und geht nach wenigen Umläufen verloren.

Figur 7 zeigt eine weiter Ausführungsform eines Laserresonators für einen Femtosekundenlaser gemäß der zweiten Variante der Erfindung. Auch dieser kann aufbauend auf die in Figur 3 gezeigte Ausführungsform mit einer zusätzlichen Vorrichtung zum Durchstimmen der Wellenlänge nach Anspruch 1 ausgestattet werden. Hier umfaßt der Resonator im Unterschied zu der in Figur 6 gezeigten Ausführungsform als räumlich dispersives Element ein halbiertes Brewster-Prisma gemäß Anspruch 5, dessen Ankatheten-Seite 34 für die Laserwellenlänge eine Antireflexbeschichtung hat. Dies ist eine besonders vorteilhafte Ausführung, da auf diese Weise nur halb soviel durch dispersive Spiegel zu kompensierende positive GGD wie in Figur 6 in den Resonator eingeführt wird.

Figur 8 dient zur Definition des Abstands d zwischen den Konkavspiegeln 21, 22 sowie der Abstände X1 und X2 des laseraktiven Elements 1 von den Konkavspiegeln 21, 22.

Figur 9 stellt den Stabilitätsbereich eines Lasersystems gemäß der ersten und zweiten Variante der Erfindung mit einem 1 GHz-Resonator und Konkavspiegeln 21 und 22 mit einer Brennweite von 15 mm dar. Aufgetragen ist die Variation des Strahltaillenradius w im laseraktiven/selbstfokussierendem Element als Funktion der mittleren Leistung P der Resonatormode. Dabei ist w der Strahltaillenradius im laseraktiven Element 1 und P die mittlere Leistung der Resonatormode im Resonator. Die Auftragung erfolgt zweidimensional über einerseits dem Spiegelabstand d sowie andererseits der Kristallposition X1. Vorteilhaft für das Auftreten einer weichen Apertur aufgrund des Kerr-Effekts im laseraktiven Element ist ein negativer Wert der Größe $w^{-1} \partial w/\partial P$. Man erkennt, dass solche Bedingungen vorliegen, wenn der Spiegelabstand d kleiner gewählt wird als die Summe der Brennweiten f21 und f22 der Konkavspiegel 21 und 22. Man erkennt weiterhin, dass dieser Effekt verstärkt wird, wenn der Abstand X1 kleiner gewählt wird als die halbe Summe der Brennweiten.

Die überragende Strahlqualität des Femtosekundenlasers/Lasersystems gemäß der Erfindung wird aus Figur 10 deutlich. Diese zeigt die Intensitätsverteilung senkrecht zur Resonatorebene, aufgenommen mittels einer CCD-Kamera. Die durchgezogene Linie stellt eine Anpassung einer Gaußfunktion an die gemessenen Werte dar. Man erkennt die hervorragende Übereinstimmung. Der Inset zeigt die Intensitätsverteilung über den gesamten Strahlquerschnitt ermittelt mit einer CCD-Kamera. Die gemessene Intensität ist mit Helligkeitswerten korreliert. Man erkennt das weitgehend kreisrunde Strahlprofil einer $TEM_{00}$-Mode.

Die hervorragende Strahlqualität bei einem Femtosekundenlaser gemäß der Erfindung zeigt sich auch im Verlauf des Strahlradius w als Funktion des Abstands vom Auskoppelspiegel. Dies ist in Figur 11 gezeigt. Die Punkte stellen die experimentell ermittelten Werte dar, die durchgezogene Linie einer Anpassung an den von der Theorie vorhergesagten Verlauf, wobei der Formalismus der realen Strahlausbreitung unter Einbeziehung des sogenannten $M^2$-Faktors verwendet wurde. Man erkennt eine hervorragende Übereinstimmung zwischen Theorie und Experiment für einen $M^2$-Faktor von 1,07, was sehr dicht am theoretischen Optimum von $M^2 = 1{,}0$ liegt.

Figur 12 zeigt die Abhängigkeit der erzeugten gepulsten Laserleistung in Abhängigkeit von der Leistung des Pumplasers für verschiedene Transmissionsgrade T des Auskopplers 3. Im Falle eines Transmissionsgrades T von 1% ergibt sich eine Quanteneffizienz $\eta$ von 6,6%. Diese steigt einem Auskoppelgrad T = 2 % auf einen Wert $\eta$ = 20%. Der Auskoppelgrad T = 1% stellt den kleinsten praktisch nutzbaren Auskoppelgrad des Auskopplers 3 dar. Der Auskoppelgrad T = 2% stellt im Falle des hier realisierten erfindungsgemäßen Lasersystems mit Ringresonator optimiert auf eine Pulswiederholfrequenz von 1 GHz das experimentell ermittelte Optimum des Auskoppelgrads T dar. Es können jedoch auch höhere Auskoppelgrade T sinnvoll sein.

**Patentansprüche**

**1.** Passiv modengekoppelter Femtosekundenlaser, mit einem Ringresonator, der die folgenden Elemente aufweist:

- ein laseraktives Element (1),
- ein selbstfokussierendes Element (2);
- ein prismatisches Element (3),
- mindestens einen dielektrischen Spiegel (4), der bei Reflexion eine negative Gruppengeschwindigkeitsdispersion ($GGD_n$)aufweist, dergestalt, daß für einen zusammenhängenden Teil des durch das laseraktive Element (1) verstärkungsfähigen optischen Spektralbereichs die Summe der Gruppengeschwindigkeitsdispersionen der Spiegel (4) und der Gruppengeschwindigkeitsdispersion des laseraktiven Elements (1) und des prismatischen Elements (3) negativ ist, d.h.

$$\sum_n GGD_n < 0$$

- zwei Konkavspiegel (41,42), die dem laseraktiven Element (1) räumlich zunächst benachbart sind und mit ihren konkaven Flächen zu diesem orientiert sind,
- einen optischen Auskoppler (5)

**dadurch gekennzeichnet,daß**

- die optische Weglänge im Resonator kleiner ist als 120 cm;
- die Brennweite (f41,f42) eines jeden der Konkavspiegel (41,42), welche dem laseraktiven Element zunächst benachbart sind, kleiner ist als 3 cm,

dergestalt, daß eine hochrepetierliche Erzeugung von Femtosekunden-Pulsen erreichbar ist,

- mindestens der dielektrische Spiegel (4) oder der Auskoppler (5) oder ein weiterer Spiegel um eine Achse verkippbar ist, dergestalt daß in Zusammenspiel mit der räumlichen Dispersion des prismatischen Elements (3) durch den Verkippungswinkel die Wellenlänge einstellbar ist, für die der Resonator Lasertätigkeit unterstützt.

2. Laser gemäß Anspruch 1, **dadurch gekennzeichnet, daß** das laseraktive Element (1) auch ein selbstfokussierendes Element (1) ist.

3. Laser gemäß Anspruch 1, **dadurch gekennzeichnet, daß** der Resonator in Zusammenspiel mit dem nichtlinearen Element (2) derart ausgestaltet ist, daß gepulster Laserbetrieb eine höhere Energieausbeute aus dem laseraktiven Element erlaubt als bei einem kontinuierlichen Laserbetrieb.

4. Laser gemäß Anspruch 1, **dadurch gekennzeichnet, daß** das prismatische Element (3) derart ausgestaltet ist, daß ein unter der Minimalablenkungsbedingung auf eine Prismenfläche (31) auftreffender optischer Strahl mit einer durch das laseraktive Medium (1) verstärkungsfähigen Wellenlänge im Brewsterwinkel auf diese auftrifft und unter diesem wieder aus der Austrittsfläche (32) austritt.

5. Laser gemäß Anspruch 1, **dadurch gekennzeichnet, daß** das prismatische Element (2) derart ausgestaltet ist, daß ein unter dem Brewsterwinkel auf eine Prismenfläche (33) auftreffender optischer Strahl mit einer durch das laseraktive Medium (1) verstärkungsfähigen Wellenlänge im wesentlichen im rechten Winkel zur Austrittsfläche (34) wieder austritt.

6. Laser gemäß Anspruch 5, **dadurch gekennzeichnet, daß** die Austrittsfläche (34) mit einer Antireflexbeschichtung für die durch das laseraktive Medium (1) verstärkungsfähigen Wellenlängen versehen ist.

7. Passiv modengekoppelter Femtosekundenlaser, mit einem Ringresonator, der die folgenden Elemente aufweist:

- ein laseraktives Element (1),
- mindestens einen dielektrischen Spiegel (2), der eine negative Gruppengeschwindigkeitsdispersion ($GGD_n$) aufweist, dergestalt dass für einen zusammenhängenden Teil des durch das laseraktive Element (1) verstärkungsfähigen optischen Spektralbereichs die Summe der Gruppengeschwindigkeitsdispersionen der Spiegel (2) und der positiven Gruppengeschwindigkeitsdispersion des laseraktiven Elements (1) negativ ist, d.h.

$$\sum_n GGD_n < 0$$

- zwei Konkavspiegel (21,22), die dem laseraktiven Element (1) räumlich zunächst benachbart sind und mit ihren konkaven Flächen zu diesem orientiert sind,
- einen optischen Auskoppler (3),

**dadurch gekennzeichnet, dass**

- die optische Weglänge im Resonator kleiner ist als 60 cm,
- die Brennweite (f21,f22) eines jeden der Konkavspiegel (21,22), welche dem laseraktiven Element zunächst benachbart sind, kleiner ist als 3 cm,

dergestalt, daß eine hochrepetierliche Erzeugung von Femtosekunden-Pulsen erreichbar ist.

8. Laser gemäß Anspruch 7 oder 1, **dadurch gekennzeichnet, dass** die beiden Brennweiten (f21,f22 bzw. f41,f42) der Konkavspiegel (21,22 bzw. 41,42), welche dem laseraktiven Element zunächst benachbart sind, im wesentlichen gleich sind.

9. Laser gemäß Anspruch 7 oder 1, **dadurch gekennzeichnet, dass** der Abstand d der Konkavspiegel (21,22 bzw. 41,42), welche dem laseraktiven Element zunächst benachbart sind, voneinander kleiner ist als die Summe der ihrer Brennweiten (f21+f22 bzw. f41+f42).

10. Laser gemäß Anspruch 9, **dadurch gekennzeichnet dass** der Abstand x1 des laseraktiven Elements (1) von einem ersten (21,41) der Konkavspiegel um mehr als 2%, vorzugsweise um mehr als 5%, insbesondere um mehr als 10%, vom Abstand x2 des laseraktiven Elements (1) von einem zweiten (22,42) der Konkavspiegel abweicht.

11. Laser gemäß Anspruch 7 oder 1, **dadurch gekennzeichnet, dass** der Abstand d der Konkavspiegel (21,22 bzw. 41,42), welche dem laseraktiven Element zunächst benachbart sind, voneinander größer ist als die Summe der Brennweiten (f21+f22 bzw. f41+f42) der Konkavspiegel und eine harte Apertur (4), insbesondere eine Ringblende, im Ringresonator angeordnet ist.

12. Laser gemäß Anspruch 7 oder 1, **dadurch gekennzeichnet, dass** das laseraktive Element (1) im wesentlichen Ti:Saphir, Cr:LiSAF, Cr:Forsterit, Cr:LiSGaF, Cr:LiCAF oder Yb:YAG enthält.

**13.** Laser gemäß Anspruch 7 oder 1, **dadurch gekennzeichnet, daß** als Pumplaser ein frequenzverdoppelter Nd:$YVO_4$-, Yb:$YVO_4$-, Nd:YAG- oder Yb:YAG-Laser verwendbar ist.

**14.** Laser gemäß Anspruch 7 oder 1, **dadurch gekennzeichnet, dass** der Auskoppelgrad T des optischen Auskopplers (3) kleiner ist als 5%, vorzugsweise kleiner ist als 3%, insbesondere kleiner oder gleich 2% ist.

**15.** Laser gemäß Anspruch 7 oder 1, **dadurch gekennzeichnet, dass** der Auskoppler (3) als teilreflektierender Spiegel ausgebildet ist.

**16.** Laser gemäß Anspruch 7 oder 1, **dadurch gekennzeichnet, dass** alle Spiegel (2) eine negative Gruppengeschwindigkeitsdispersion GDD aufweisen.

**17.** Laser gemäß Anspruch 7 oder 1, **dadurch gekennzeichnet, dass** nur ein Spiegel (2) eine negative Gruppengeschwindigkeitsdispersion GDD aufweist.

**18.** Laser gemäß Anspruch 7 oder 1, **dadurch gekennzeichnet, dass** der Ringresonator astigmatismuskompensiert ist.

**19.** Laser gemäß Anspruch 18, **dadurch gekennzeichnet, dass** die optische Weglänge im Ringresonator größer ist als 1 cm, vorzugsweise größer als 2 cm, insbesondere größer als 3,5 cm.

**20.** Laser gemäß Anspruch 7 oder 1, **dadurch geknnzeichnet, dass** alle Elemente des Ringresonators mechanisch auf einer gemeinsamen Montageplattform zusammengefasst sind.

**21.** Passiv modengekoppelter hochrepetierlicher Femtosekundenlaser, nach einem der vorhergehenden Ansprüche, mit einem Ringresonator, der

- ein laseraktives Element,
- einen optischen Auskoppler
- sowie mindestens ein spiegelndes Element und ein prismatisches Element

aufweist, wobei

mindestens das spiegelnde Element oder der Auskoppler (5) um eine Achse verkippbar ist, dergestalt daß in Zusammenspiel mit der räumlichen Dispersion des prismatischen Elements (3) durch den Verkippungswinkel die Wellenlänge einstellbar ist, für die der Resonator Lasertätigkeit unterstützt.

**22.** Verfahren zum Durchstimmen eines passiv modengekoppelten, hochrepetierlichen Femtosekundenlasers, nach Anspruch 1 oder 21, mit einem Ringresonator, der

- ein laseraktives Element,
- einen optischen Auskoppler
- sowie mindestens ein spiegelndes Element und ein prismatisches Element

umfaßt,
wobei
in einem ersten Verfahrensschritt ein hochrepetierlicher Pulsbetrieb eingestellt wird, und
in einem zweiten Verfahrensschritt das spiegelnde Element oder der Auskoppler (5) um eine Achse verkippt wird, dergestalt daß in Zusammenspiel mit der räumlichen Dispersion des prismatischen Elements (3) durch den Verkippungswinkel sich die Wellenlänge einstellt, für die der Resonator Lasertätigkeit unterstützt.

**23.** Verwendung eines passiv modengekoppelten Femtosekundenlasers nach Anspruch 7 oder 1 zur hochrepetierlichen Erzeugung von Femtosekundenpulsen.

## Claims

**1.** A passive mode coupled femtosecond laser having a ring resonator, comprising the elements:

- a laser-active element (1),
- a self-focusing element (2);
- a prismatic element (3),
- at least one dielectric mirror (4), having a negative group velocity dispersion ($GVD_n$) for reflection, such that for a contiguous part of the optical spectrum capable of being amplified by the laser-active element (1), the sum of the group velocity dispersion of the mirrors (4) and the group velocity dispersion of the laser-active element (1) and the prismatic element (3) is negative, in accordance with:

$$\sum_n GVD_n < 0,$$

- two concave mirrors (41, 42) which are spatially arranged immediately adjacent to the laser-active element (1) and are oriented with their concave surfaces towards the laser-active element (1),
- an optical output coupler (5)

**characterized in that**

- the optical path length of the resonator is below 120 cm,
- the focus length (f41, f42) of each of the concave mirrors (41, 42), which are arranged immediately adjacent to the laser-active element (1) is below 3 cm,

whereby a high repetition generation of femtosecond pulses is obtainable and

- at least one of, the dielectric mirror (4), the output coupler (5), and a further mirror, is tiltable upon an axis such that by adjusting the tilt angle in interplay with the spatial dispersion of the prismatic element (3) a wavelength is adjustable for which the resonator supports laser activity.

2. The laser according to claim 1, **characterized in that** the laser-active element (1) is a self-focusing element (1).

3. The laser according to claim 1, **characterized in that** the resonator is adapted in interplay with the non-linear element (2), such that pulsed laser activity allows a higher energy output from the laser-active element as compared to continuous laser activity.

4. The laser according to claim 1, **characterized in that** the prismatic element (3) is adapted such that an optical beam incident on a prism surface (31) under condition of minimal deflection is incident on the prism surface at a Brewster angle for the wavelength amplifiable by the laser-active medium (1) and escapes at the Brewster angle from the surface of exit (32).

5. The laser according to claim 1, **characterized in that** the prismatic element (2) is adapted such that an optical beam incident on a prism surface (33) at a Brewster angle for the wavelength amplifiable by the laser-active medium (1) escapes essentially under a right angle from the surface of exit (34).

6. The laser according to claim 5, **characterized in that** an antireflection coating for the wavelength amplifiable by the laser-active medium (1) is applied to the surface of exit (34).

7. A passive mode coupled femtosecond laser having a ring resonator, comprising the elements:

- a laser-active element (1),
- at least one dielectric mirror (2) having a negative group velocity dispersion ($GVD_n$) such that for a contiguous part of the optical spectrum capable of being amplified by the laser-active element (1), the sum of the group velocity dispersion of the mirrors (2) and the positive group velocity dispersion of the laser-active element (1) is negative, in accordance with:

$$\sum_n GVD_n < 0,$$

- two concave mirrors (21, 22) which are spatially arranged immediately adjacent to the laser-active element and are oriented with their concave surfaces towards the laser-active element (1),
- an optical output coupler (3),

**characterized in that**

- the optical path length of the resonator is below 60 cm,
- the focus length (f21, f22) of each of the concave mirrors (21, 22) which are arranged immediately adjacent to the laser-active element is below 3 cm,

whereby a high repetition generation of femtosecond pulses is obtainable.

8. The laser according to claim 7 or 1, **characterized in that** both focus lengths (f21, f22, f41, f42) of the concave mirrors (21, 22, 41, 42), which are adjacent next to the laser-active element, are essentially equal in value.

9. The laser according to claim 7 or 1, **characterized in that** the distance (d) of the concave mirrors (21, 22, 41, 42) to each other, which are adjacent to the laser-active element, is smaller than the sum of their focus lengths (f21 + f22, f41 + f42).

10. The laser according to claim 9, **characterized in that** the distance (x1) of the laser-active element (1) from a first concave mirror (21, 41) differs by more than 2 %, advantageously by more than 5 %, in particular by more than 10 %, from the distance (x2) of the laser-active element (1) from a second concave mirror (22, 42).

11. The laser according to claim 7 or 1, **characterized in that** the distance (d) of the concave mirrors (21, 22, 41, 42) to each other, which are adjacent to the laser-active element, is greater than the sum of focus lengths (f21 + f22, f41 + f42) of the concave mirrors and a hard aperture (4), in particular a ring aperture, is located in the ring resonator.

**12.** The laser according to claim 7 or 1, **characterized in that** the laser-active element (1) essentially comprises Ti:Saphir, Cr:LiSAF, Cr:Forsterit, Cr:LiSGaF, CR:LiCAF or Yb:YAG.

**13.** The laser according to claim 7 or 1, **characterized in that** a frequency doubled Nd:$YVO_4$-, Yb:$YVO_4$-, Nd:YAG- or Yb:YAG-laser is usable as a pump laser.

**14.** The laser according to claim 7 or 1, **characterized in that** the degree of outcoupling (T) of the optical output coupler (3) is below 5 %, advantageously below 3 %, in particular below or equal to 2 %.

**15.** The laser according to claim 7 or 1, **characterized in that** the output coupler (3) is configured as a partial reflecting mirror.

**16.** The laser according to claim 7 or 1, **characterized in that** all mirrors (2) have a negative group velocity dispersion (GVD).

**17.** The laser according to claim 7 or 1, **characterized in that** only one mirror (2) has a negative group velocity dispersion (GVD).

**18.** The laser according to claim 7 or 1, **characterized in that** the ring resonator is compensated for astigmatism.

**19.** The laser according to claim 18, **characterized in that** the optical path length of the ring resonator exceeds 1 cm, advantageously exceeds 2 cm, in particular exceeds 3,5 cm.

**20.** The laser according to claim 7 or 1, **characterized in that** all elements of the ring resonator are mechanically arranged on a common mounting platform.

**21.** The passive mode coupled high repetition rate femtosecond laser as claimed in any of the preceding claims, having a ring resonator with

- a laser-active element,
- an optical output coupler
- and at least one mirroring element and one prismatic element,

whereby
at least one of the mirroring element and the output coupler (5) is tiltable upon an axis such that in interplay with the spatial dispersion of the prismatic element (3) the wavelength for which the resonator supports laser activity is adjustable by the tilt angle.

**22.** A method for tuning a passive mode locked high repetition rate femtosecond laser according to claim 1 or claim 21, having a ring resonator with

- a laser-active element,
- an optical output coupler
- and at least one mirroring element and a prismatic element,

whereby
in a first step a high repetition pulsed operation is provided and
in a second step at least one of the mirroring element and the output coupler (5) is tilted upon an axis such that in interplay with the spatial dispersion of the prismatic element (3) by the tilt angle a wavelength is furnished for which the resonator supports laser activity.

**23.** A method of use of a passive mode locked femtosecond laser as claimed in claims 7 or 21 for high repetition generation of femtosecond pulses.

## Revendications

**1.** Laser femtoseconde à couplage de modes passif, comportant un résonateur annulaire et les éléments suivants :

- un élément (1) actif laser,
- un élément autofocus (2),
- un élément prismatique (3),
- au moins un miroir diélectrique (4) qui, en réflexion, présente une dispersion négative de vitesse de groupe ($GGD_n$) telle que pour une partie d'un seul tenant du domaine spectral optique pouvant être amplifié par l'élément (1) actif laser, la somme des dispersions des vitesses de groupe des miroirs (4) et de la dispersion des vitesses de groupe de l'élément (1) actif laser et de l'élément prismatique (3), est négative, c'est-à-dire

  • $\Sigma GGD < 0$

- deux miroirs concaves (41, 42) qui sont d'abord voisins dans l'espace de l'élément (1) actif laser et qui sont orientés vers celui-ci par leurs surfaces concaves,

- un déclencheur optique (5),

**caractérisé en ce que**

- la distance optique dans le résonateur est inférieure à 120 centimètres,
- la distance focale (f41, f42) de chacun des miroirs concaves (41, 42), qui sont d'abord voisins de l'élément actif laser, est inférieure à 3 centimètres

de manière que l'on puisse obtenir une production hautement répétitive d'impulsions de l'ordre des femtosecondes,

- au moins le miroir diélectrique (4) ou le déclencheur (5) ou un autre miroir peut basculer autour d'un axe, de manière qu'en coopération avec la dispersion dans l'espace de l'élément prismatique (3), l'angle de basculement permette de régler la longueur d'onde pour laquelle le résonateur favorise l'activité laser.

**2.** Laser selon la revendication 1, **caractérisé en ce que** l'élément (1) actif laser est aussi un élément autofocus (1).

**3.** Laser selon la revendication 1, **caractérisé en ce que** le résonateur en coopération avec l'élément (2) non linéaire est conçu de manière, que le mode laser pulsé permette un plus grand rendement énergétique de l'élément actif laser qu'en mode laser continu.

**4.** Laser selon la revendication 1, **caractérisé en ce que** l'élément prismatique (3) est conçu de manière qu'un rayon optique, parvenant sur une surface du prisme (31), dans des conditions de déviation minimale, parvient sur celle-ci dans l'angle d'incidence browsterienne, avec une longueur d'onde susceptible d'amplification par le fluide (1) actif laser, et ressort de la surface (32), suivant ce même angle.

**5.** Laser selon la revendication 1, **caractérisé en ce que** l'élément prismatique (2) est conçu de manière qu'un rayon optique parvenant sur une surface de prisme (33) suivant l'angle d'incidence browsterienne, ressort sensiblement perpendiculairement à la surface de sortie (34), avec une longueur d'onde susceptible d'amplification par le fluide (1) actif laser.

**6.** Laser selon la revendication 5, **caractérisé en ce que** la surface de sortie (34) est pourvue d'un revêtement anti-reflets pour les longueurs d'ondes susceptibles d'amplification par le fluide (1) actif laser.

**7.** Laser de l'ordre des femtosecondes à couplage de modes passif, comportant un résonateur annulaire et les éléments suivants :

- un élément (1) actif laser,
- un élément autofocus (2),
- un élément prismatique (3),
- au moins un miroir diélectrique (2) qui présente une dispersion négative des vitesses de groupe ($GGD_n$), telle que pour une partie d'un seul tenant du domaine spectral optique pouvant être amplifié par l'élément (1) actif laser, la somme des dispersions des vitesses de groupe des miroirs (2) et de la dispersion des vitesses de groupe positive de l'élément (1) actif laser, est négative, c'est-à-dire

$$\bullet\ \Sigma GGD < 0$$

- deux miroirs concaves (21, 22) qui sont d'abord voisins dans l'espace de l'élément (1) actif laser et qui sont orientés vers celui-ci par leurs surfaces concaves,
- un déclencheur optique (3),

**caractérisé en ce que**

- la distance optique dans le résonateur est inférieure à 60 centimètres,
- la distance focale (f21, f22) de chacun des miroirs concaves (21, 22), qui sont d'abord voisins de l'élément actif laser, est inférieure à 3 centimètres.

**8.** Laser selon la revendication 7 ou 1, **caractérisé en ce que** les deux distances focales (f21 ou f22 ou F41, f42) des miroirs concaves (21, 22 ou 41, 42), qui sont d'abord voisins de l'élément actif laser, sont sensiblement égales.

**9.** Laser selon la revendication 7 ou 1, **caractérisé en ce que** la distance (d) des miroirs concaves (21, 22 ou 41, 42), qui sont d'abord voisins de l'élément actif laser, est inférieure à la somme de leurs distances focales (f21 + f22 ou f41 + f42).

**10.** Laser selon la revendication 9, **caractérisé en ce que** la distance (x1) de l'élément (1) actif laser par rapport à un premier (21, 41) des miroirs concaves s'écarte de plus de 2 %, de préférence de plus de 5 %, en particulier de plus de 10 %, de la distance (x2) de l'élément (1) actif laser par rapport à un deuxième (22, 42) des miroirs concaves.

**11.** Laser selon la revendication 7 ou 1, **caractérisé en ce que** la distance (d) des miroirs concaves (21, 22 ou 41, 42) qui sont d'abord voisins de l'élément actif laser, est supérieure à la somme des distances focales (f21 + f22 ou f41 + f42) des miroirs concaves et une ouverture dure (4), en particulier un diaphragme annulaire, est disposée dans le résonateur annulaire.

**12.** Laser selon la revendication 7 ou 1, **caractérisé en ce que** l'élément (1) actif laser contient essentiellement Ti:Saphir, Cr:LiSAF, Cr:Forsterite, Cr:LiSGaF, Cr:LiCAF ou Yb:YAG.

**13.** Laser selon la revendication 7 ou 1, **caractérisé en ce qu'**on peut utiliser comme laser de pompage un laser Nd:$YVO_4$, un laser Yb:$YVO_4$, un laser Nd:YAG ou un laser Yb:YAG à fréquence double.

**14.** Laser selon la revendication 7 ou 1, **caractérisé en ce que** le degré de déclenchement (T) du déclencheur optique (3) est inférieur à 5 %, de préférence inférieur à 3 %, en particulier inférieur ou égal à 2 %.

**15.** Laser selon la revendication 7 ou 1, **caractérisé en ce que** le déclencheur (3) est conformé en miroir partiellement réfléchissant.

**16.** Laser selon la revendication 7 ou 1, **caractérisé en ce que** tous les miroirs (2) présentent une dispersion des vitesses de groupe (GGD) négative.

**17.** Laser selon la revendication 7 ou 1, **caractérisé en ce qu'**un seul miroir (2) présente une dispersion des vitesses de groupe (GGD) négative.

**18.** Laser selon la revendication 7 ou 1, **caractérisé en ce que** le résonateur annulaire a une compensation de l'astigmatisme.

**19.** Laser selon la revendication 18, **caractérisé en ce que** la distance optique dans le résonateur annulaire est supérieure à 1 centimètre, de préférence supérieure à 2 centimètres, en particulier supérieure à 3,5 centimètres.

**20.** Laser selon la revendication 7 ou 1, **caractérisé en ce que** tous les éléments du résonateur annulaire sont réunis mécaniquement sur une plate-forme de montage commune.

**21.** Laser femtoseconde hautement répétitif à couplage de modes passif selon l'une des revendications précédentes, comportant un résonateur annulaire qui comporte

- un élément actif laser,
- un déclencheur optique,
- ainsi qu'au moins un élément réfléchissant et un élément prismatique,

au moins l'élément réfléchissant ou le déclencheur (5) pouvant basculer autour d'un axe, de manière qu'en coopération avec la dispersion dans l'espace de l'élément prismatique (3), l'angle de basculement permette de régler la longueur d'onde pour laquelle le résonateur favorise l'activité laser.

**22.** Procédé pour régler un laser femtoseconde hautement répétitif, à couplage de modes passif, selon la revendication 20 ou 21, comportant un résonateur annulaire qui comprend

- un élément (1) actif laser,
- un élément autofocus (2),
- un élément prismatique (3),

un mode pulsé hautement répétitif étant réglé dans une première étape du procédé, et
dans une deuxième étape du procédé, l'élément réfléchissant ou le déclencheur (5) étant basculé autour d'un axe, de manière qu'en coopération avec la dispersion dans l'espace de l'élément prismatique (3), l'angle de basculement permette de régler la longueur d'onde pour laquelle le résonateur favorise l'activité laser.

**23.** Utilisation d'un laser femtoseconde à couplage de modes passif, selon la revendication 7 ou 1 pour la production hautement répétitive d'impulsions de l'ordre des femtosecondes.

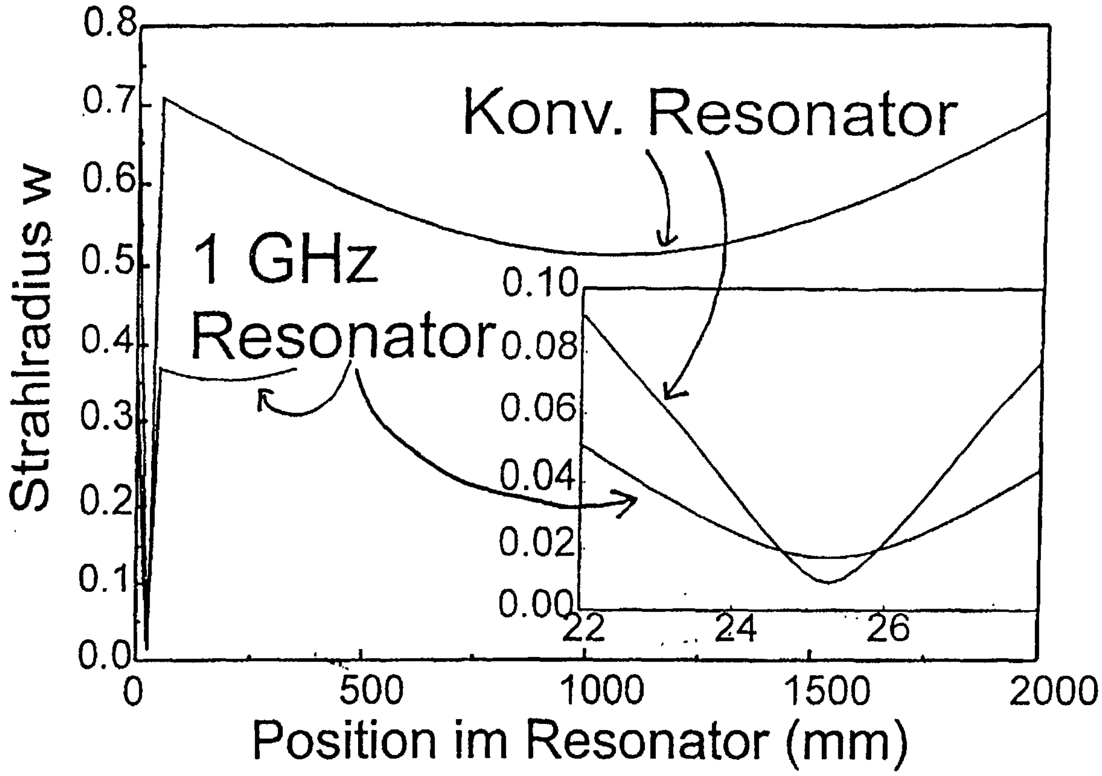
Konv. Resonator
1 GHz
Resonator
Strahlradius w
Position im Resonator (mm)
0.0
0.1
0.2
0.3
0.4
0.5
0.6
0.7
0.8
0
500
1000
1500
2000
0.00
0.02
0.04
0.06
0.08
0.10
22
24
26

**Fig. 1**

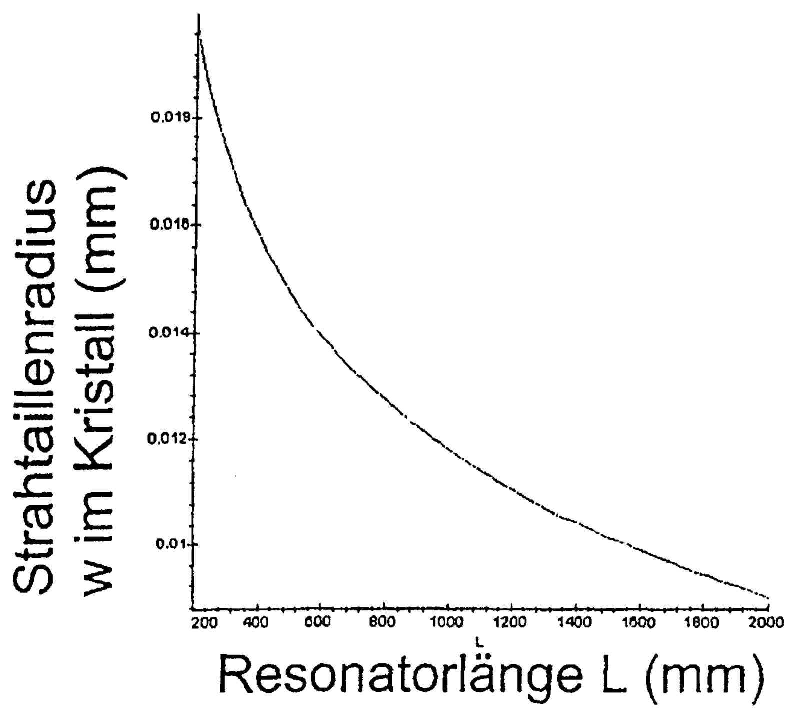
Strahtaillenradius
w im Kristall (mm)
Resonatorlänge L (mm)
0.018
0.016
0.014
0.012
0.01
200
400
600
800
1000
1200
1400
1600
1800
2000
L

**Fig. 2**

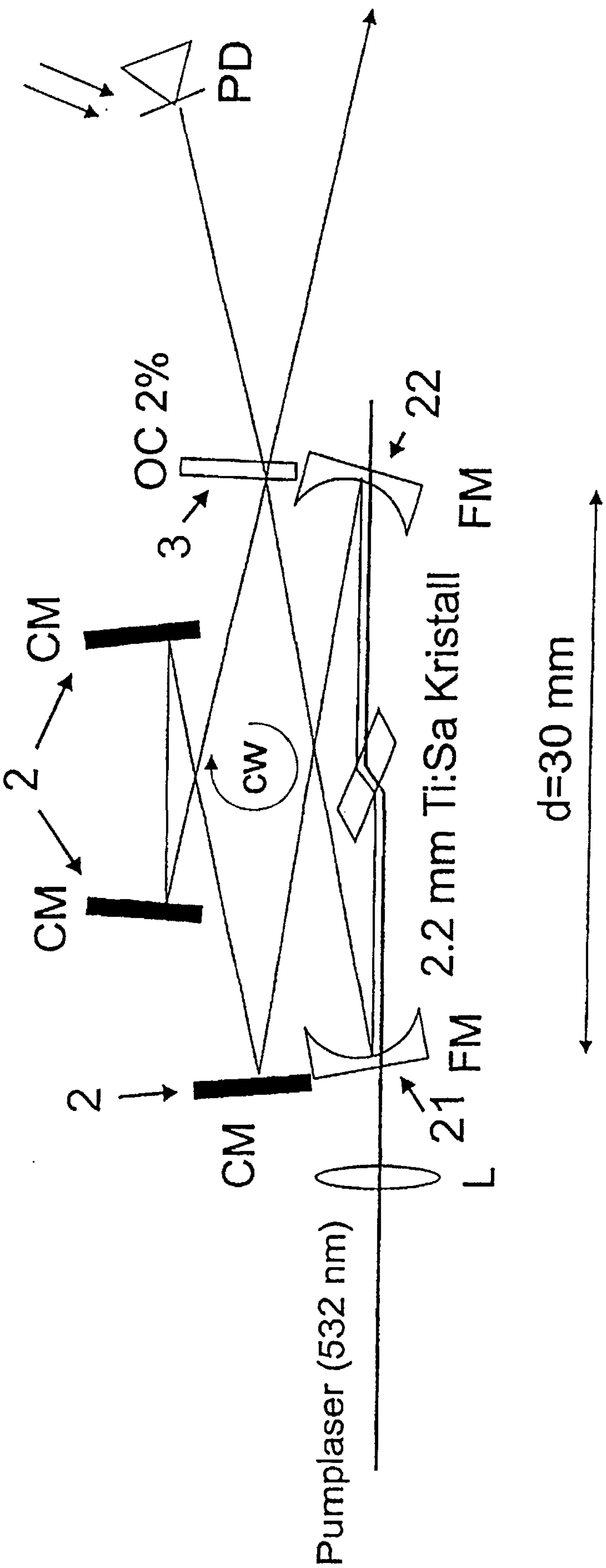
PD
OC 2%
3
22
FM
CM
2
CM
cw
2
2.2 mm Ti:Sa Kristall
d=30 mm
CM
FM
21
L
Pumplaser (532 nm)

Fig. 3

Fig. 4

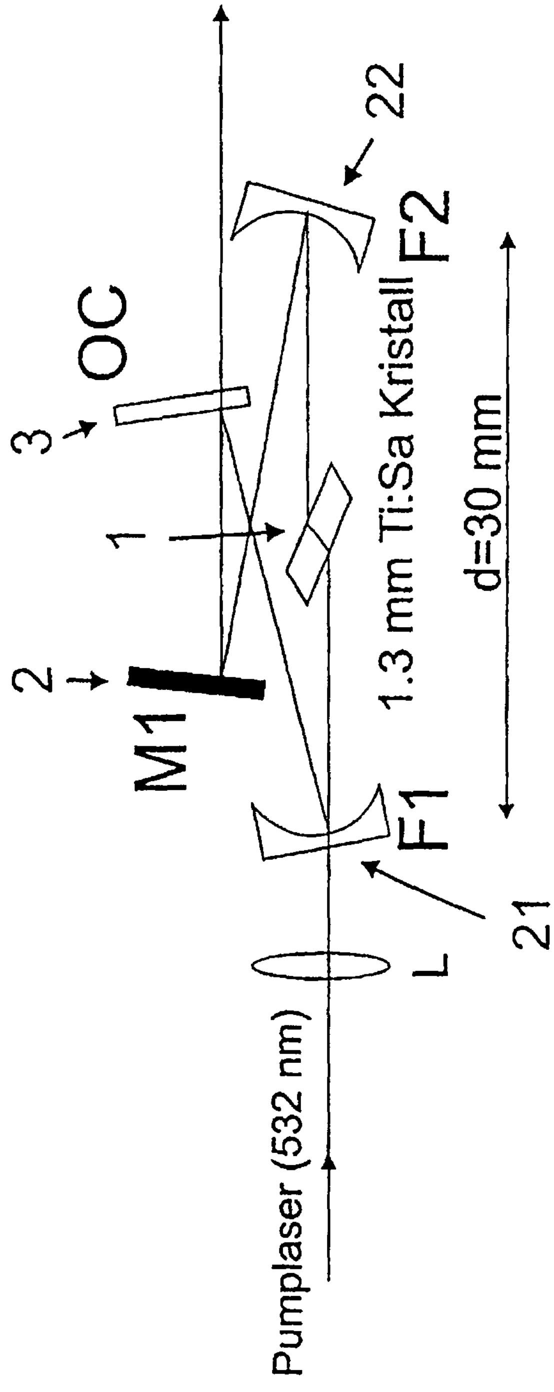

Pumplaser (532 nm)
L
21
F1
M1
2
1.3 mm Ti:Sa Kristall
d=30 mm
1
3
OC
F2
22

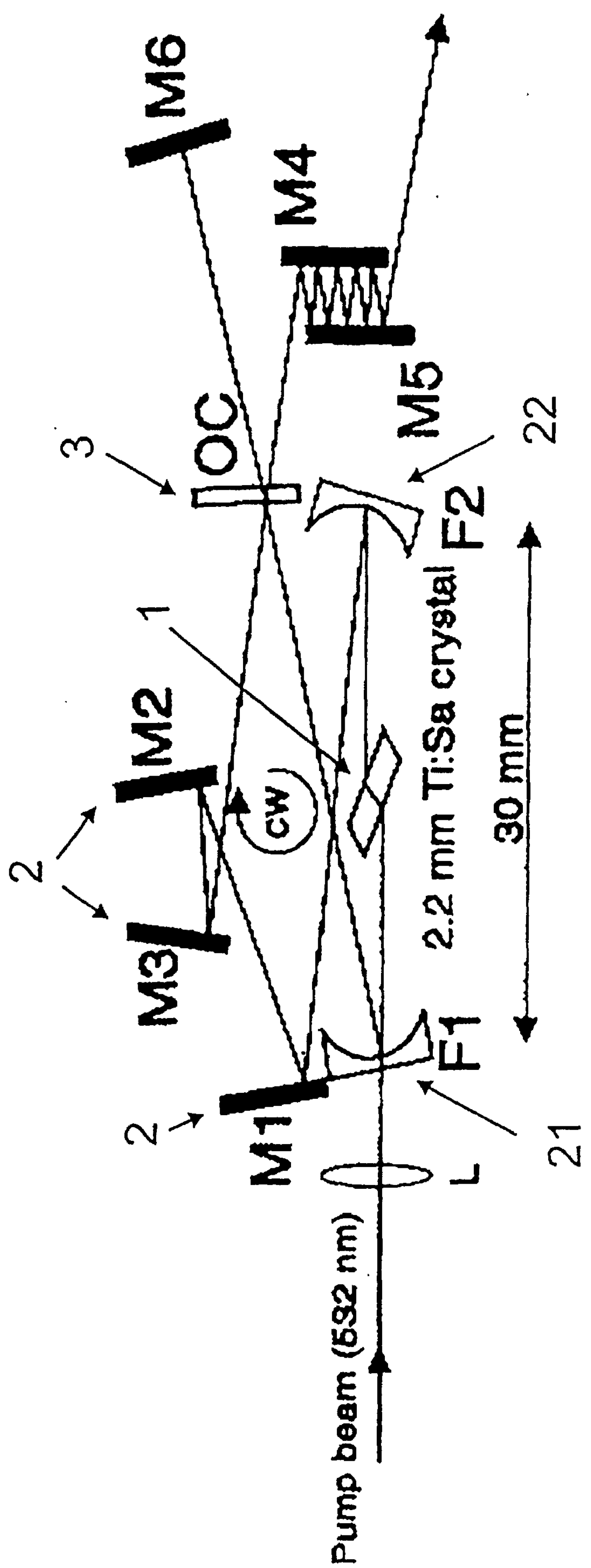
M6
M4
M5
OC
3
22
F2
1
M2
CW
2
M3
2.2 mm Ti:Sa crystal
30 mm
F1
2
M1
L
21
Pump beam (532 nm)

Fig. 5

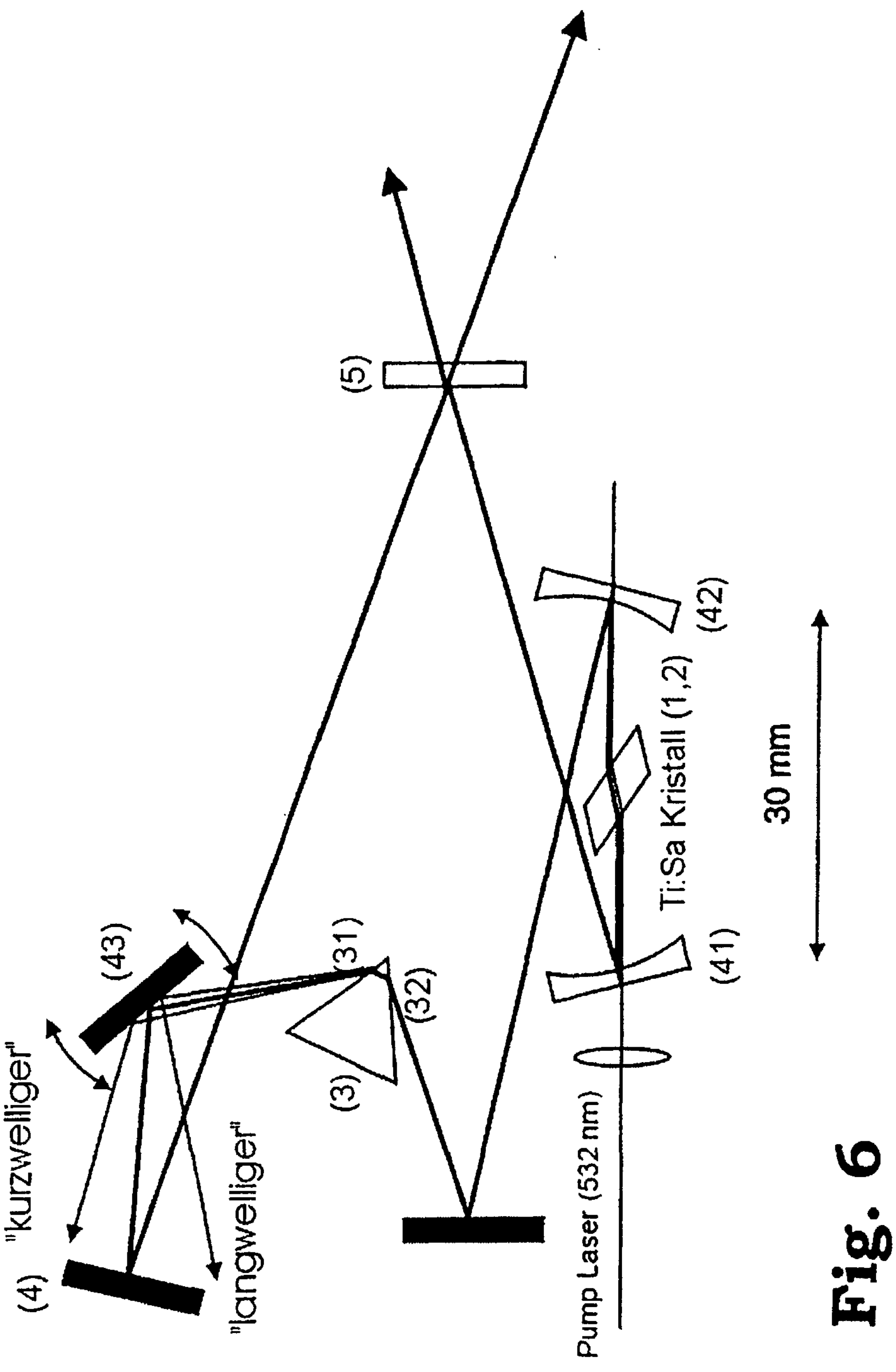
(5)
(42)
Ti:Sa Kristall (1,2)
30 mm
(41)
(43)
(31)
(32)
(3)
"kurzwelliger"
"langwelliger"
(4)
Pump Laser (532 nm)

Fig. 6

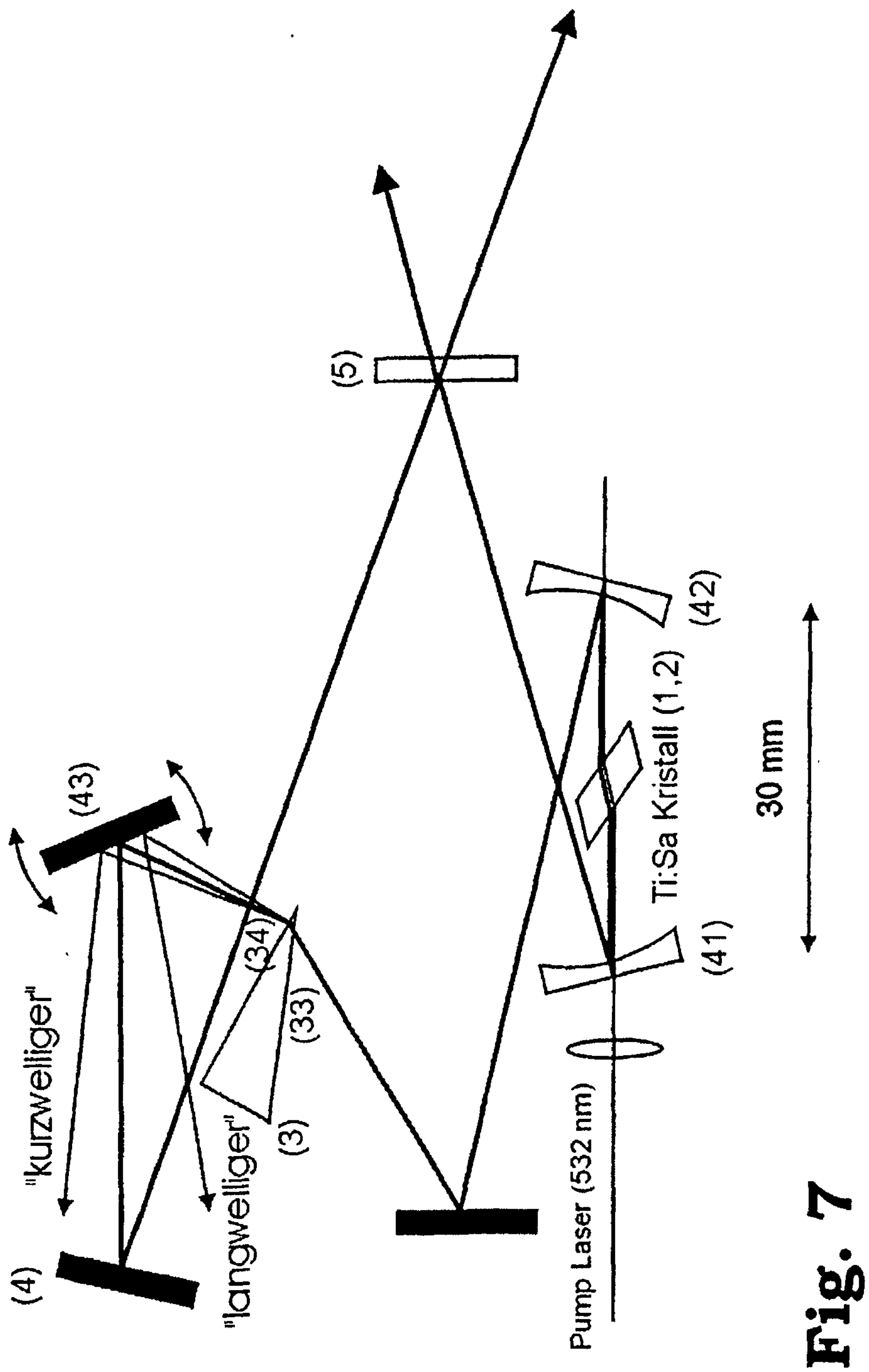
(5)
(43)
(4)
"kurzwelliger"
"langwelliger"
(34)
(33)
(3)
(42)
(41)
Ti:Sa Kristall (1,2)
Pump Laser (532 nm)
30 mm

Fig. 7

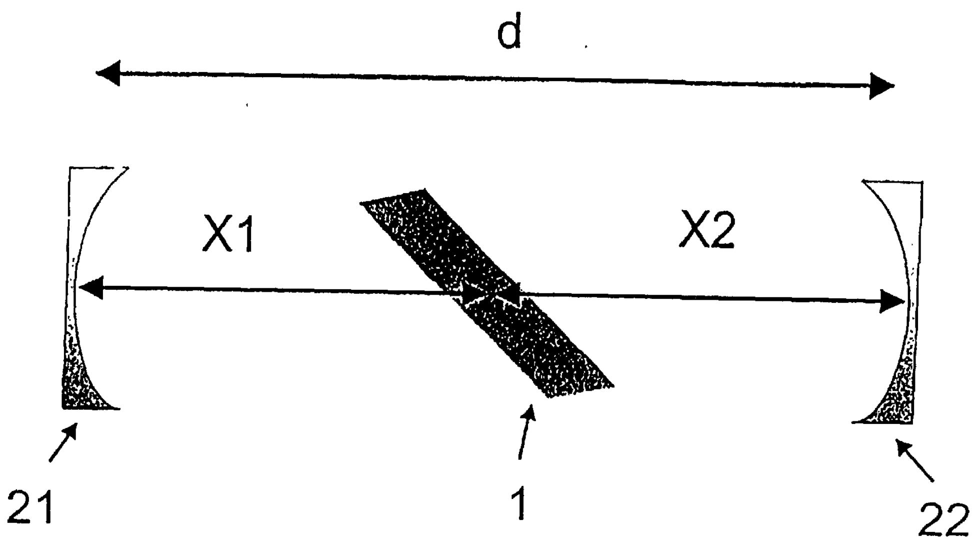
d
X1
X2
21
1
22

**Fig. 8**

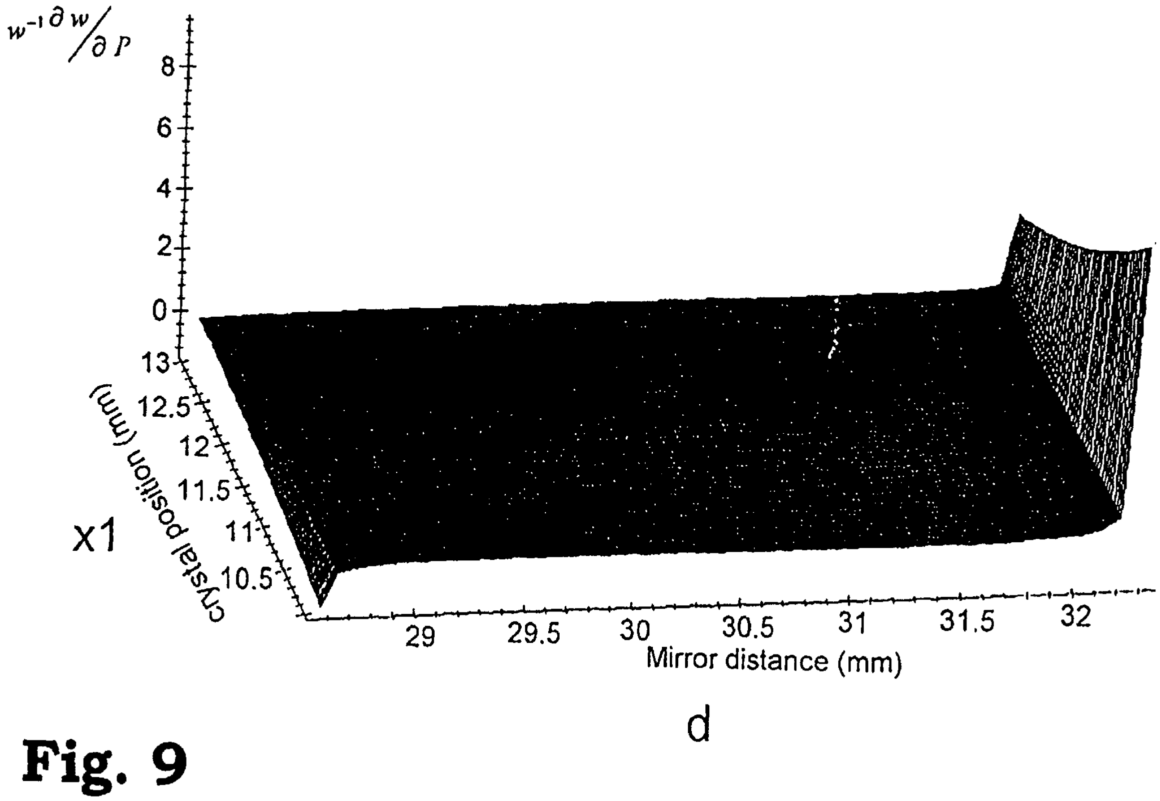
$w^{-1}\partial w / \partial P$
8
6
4
2
0
13
12.5
12
11.5
11
10.5
crystal position (mm)
x1
29
29.5
30
30.5
31
31.5
32
Mirror distance (mm)
d

**Fig. 9**

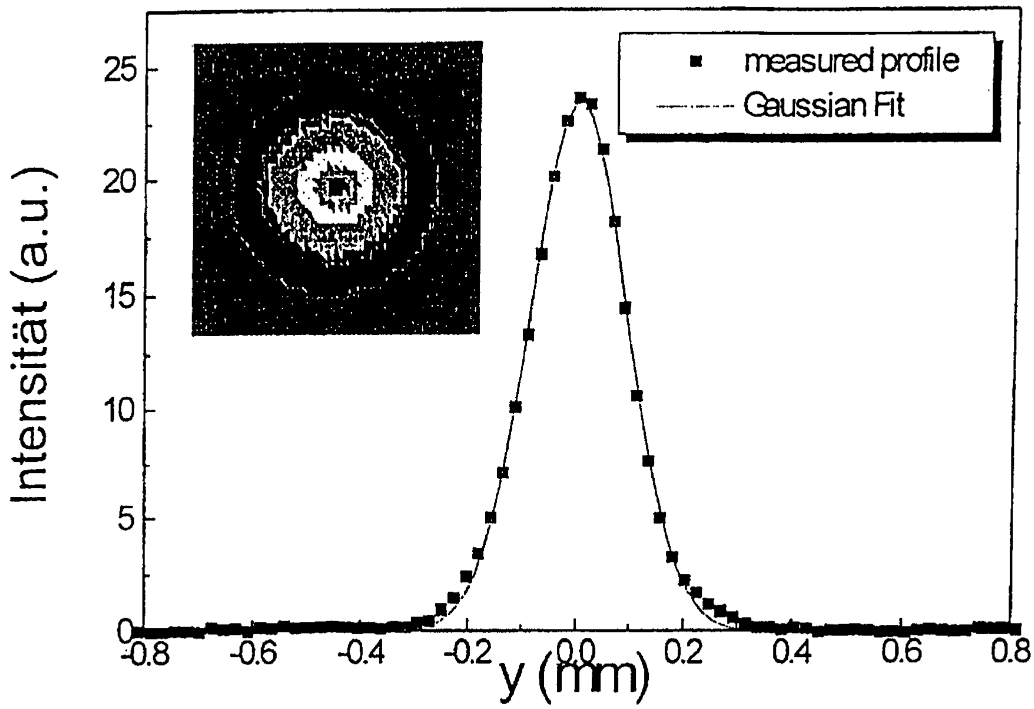
measured profile
Gaussian Fit
Intensität (a.u.)
y (mm)
25
20
15
10
5
0
-0.8
-0.6
-0.4
-0.2
0.0
0.2
0.4
0.6
0.8

**Fig. 10**

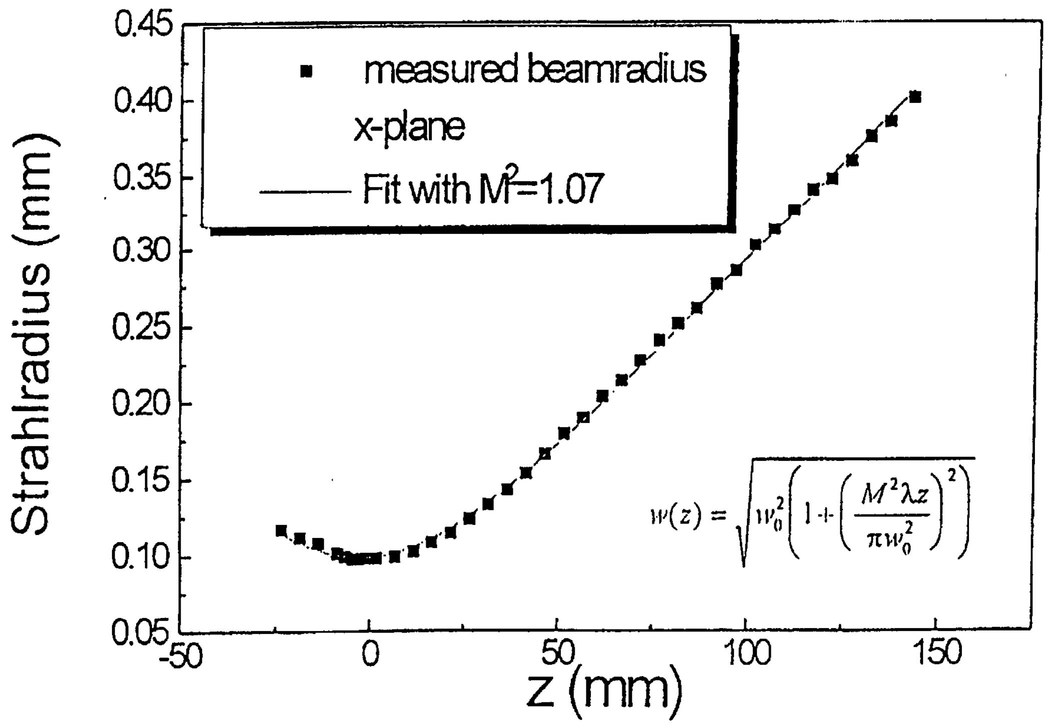
measured beamradius
x-plane
Fit with M²=1.07
Strahlradius (mm)
z (mm)
0.45
0.40
0.35
0.30
0.25
0.20
0.15
0.10
0.05
-50
0
50
100
150
$w(z) = \sqrt{w_0^2\left(1+\left(\frac{M^2\lambda z}{\pi w_0^2}\right)^2\right)}$

**Fig. 11**

Fig. 12

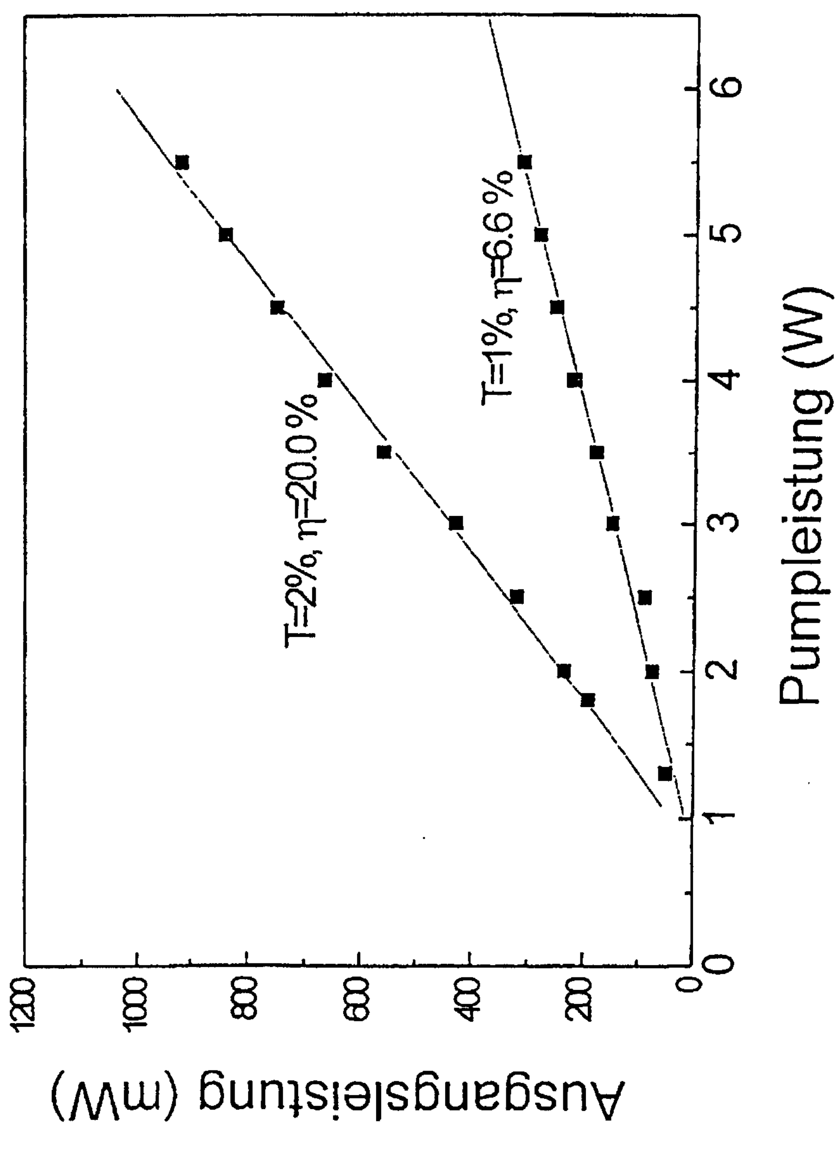

T=2%, η=20.0 %
T=1%, η=6.6 %
Pumpleistung (W)
Ausgangsleistung (mW)
0
1
2
3
4
5
6
0
200
400
600
800
1000
1200